# EUROPEAN PATENT APPLICATION

(11) **EP 3 318 919 A1**
(43) Date of publication of application: **09.05.2018**
(21) Application number: 16818259.0
(22) Date of filing: 30.06.2016
(51) Int. Cl.: G02C 5/14, G02C 5/20

(54) **EAR HOOK UNIT FOR PREVENTING SEPARATION, EYEGLASSES FRAME HAVING EAR HOOK UNIT, AND EYEGLASSES HAVING EYEGLASSES FRAME**

(30) Priority: 01.07.2015 KR 20150094403; 08.01.2016 KR 20160002536
(71) Applicant: Park, Suhjun, Seogwipo-si Jeju-do 63568 (KR)
(72) Inventor: Park, Suhjun, Seogwipo-si Jeju-do 63568 (KR)
(74) Representative: Algemeen Octrooi- en Merkenbureau B.V.
(86) International application number: PCT/KR2016/007054
(87) International publication number: WO 2017/003226

(57) **Abstract**

The present disclosure relates to a nose-separation earpiece unit, an eyeglass frame having the same, and eyeglasses having the same in which a separate earpiece is further included on an existing earpiece passing over the ear when the eyeglasses are worn such that positions at which the eyeglasses are worn may be varied, and the eyeglasses may be worn even when the eyeglasses are separated from a main part of face to wash or apply makeup or when things are viewed without a lens due to having myopia or the like.

## Description

### Technical Field

The present disclosure relates to eyeglasses, and more particularly, to a nose-separation earpiece unit, an eyeglass frame having the same, and eyeglasses having the same in which a separate earpiece is further included on an existing earpiece passing over the ear when the eyeglasses are worn, such that positions at which the eyeglasses are worn may be varied, and the eyeglasses may be worn even when the eyeglasses are separated from a main part of a face to wash or apply makeup, or when things are viewed without a lens due to having myopia or the like, thereby having an effect of not wearing the eyeglasses while the eyeglasses are not removed, preventing loss of the eyeglasses, providing convenience to a wearer by being able to fold or unfold the separate earpiece from the existing earpiece, and providing comfort to the wearer when the wearer wears the eyeglasses by being able to maintain a state in which a position of the lens or an eyeglass rim is separated from the wearer's nose and thus preventing the lens, the eyeglass rim, or a bridge from coming into contact with the wearer' nose, or preventing a load of the lens or eyeglass rim from being placed on the wearer's nose.

### Background Art

Generally, eyeglasses are for correcting an eyeglass wearer's vision or protecting the eyeglass wearer's eye from ultraviolet rays, infrared rays, and the like. Recently, the number of people whose vision needs correction or whose eye needs protection due to changes in living environment, lifestyle, and the like has been in an increasing trend. Furthermore, eyeglasses have recently been widely utilized as fashion accessories, and thus there has been a trend in which people irrelevant to vision correction or eye protection often wear eyeglasses.

However, because a center of gravity of existing eyeglasses is placed at a front portion thereof due to weight of the lens, a portion of an eyeglass wearer's nose may be pressed by eyeglasses when the eyeglass wearer wears the eyeglasses for a long period of time.

Also, existing eyeglasses have a structure in which the shape of an eyeglass frame is constant. Therefore, an eyeglass wearer chooses eyeglasses having an eyeglass frame that fits him or herself from an eyeglass store and wears the eyeglasses. That is, because eyeglass wearers have different face sizes, choosing eyeglasses having an eyeglass frame that best fits an eyeglass wearer is extremely important.

Particularly, there is a case in which an eyeglass wearer separates eyeglasses from a main part of his or her face to wash or apply makeup, or removes eyeglasses to view things without lenses due to having myopia or the like. In such a case, there is a problem in that motion of removing eyeglasses is large, it is difficult to find an appropriate place for putting removed eyeglasses, or removed eyeglasses are forgotten and thus lost. Therefore, these problems need to be solved.

The related art of the present disclosure is disclosed in Korean Patent Registration No. 10-0291713 (Date of Registration: March 15, 2001; Title of Disclosure: Foldable member installed on eyeglass temple of eyeglasses).

### Disclosure

### Technical Problem

The present disclosure has been devised to solve the above problems, and it is an aspect of the present disclosure to provide a nose-separation earpiece unit, an eyeglass frame having the same, and eyeglasses having the same, in which a state in which a position of a lens, an eyeglass rim, or a bridge is separated from a wearer's nose is maintained and thus the lens or the eyeglass rim does not come into contact with the wearer' nose, or a load of the lens or the eyeglass rim is not placed on the wearer's nose, thereby providing comfort to the wearer when wearing the eyeglasses.

Also, it is an aspect of the present disclosure to provide a nose-separation earpiece unit, an eyeglass frame having the same, and eyeglasses having the same, in which a separate earpiece is further included at an existing earpiece passing over the ear when the eyeglasses are worn such that positions at which the eyeglasses are worn may be varied, and the eyeglasses may be worn even when the eyeglasses are separated from a main part of the face to wash or apply makeup, or when things are viewed without a lens due to having myopia or the like, thereby decreasing the number of times of performing motion of completely removing the eyeglasses, reducing inconvenience of having to find a place for putting removed eyeglasses, and preventing loss of the eyeglasses.

In addition, it is an aspect of the present disclosure to provide a nose-separation earpiece unit, an eyeglass frame having the same, and eyeglasses having the same, in which at least one of earpieces separate from an existing earpiece may be detached from an eyeglass temple length part, thereby reducing a maintenance and repair cost.

Further, it is an aspect of the present disclosure to provide a nose-separation earpiece unit, an eyeglass frame having the same, and eyeglasses having the same, in which a separate earpiece may be folded to or unfolded from an existing earpiece, thereby providing convenience to a wearer.

### Technical Solution

Eyeglasses according to the present disclosure include an eyeglass temple connected to a lens or an eyeglass rim and passing over an ear, wherein the eyeglass temple includes an eyeglass temple length part, which is an axial portion of the eyeglass temple connected to the lens or the eyeglass rim, and an earpiece part passing over the ear, and the earpiece part maintains a state in which a position of the lens or the eyeglass rim is separated from a wearer's nose or mitigates a pressure caused by a load of the eyeglass rim or lens applied to the wearer's nose.

By manipulating at least one of the earpiece part and the eyeglass temple length part, a position at which the lens or the eyeglass rim is worn on the wearer may be adjusted to be separated from the wearer's nose.

The earpiece part may include a nose-separation earpiece unit, and the nose-separation earpiece unit may include a nose-separation earpiece part connected to the eyeglass temple length part and passing over the wearer's ear, and a lower portion maintaining part formed by being connected to at least one of the eyeglass temple length part or the nose-separation earpiece part.

When supported by coming into contact with a front side of the ear, the lower portion maintaining part may maintain a state in which a lens without the eyeglass rim, an eyeglass rim without a bridge, or a bridge is separated from the nose or mitigate a pressure that is caused by the load of the eyeglass rim or lens and applied to the nose.

The earpiece part may have an eyeglass temple rotation preventing part extending to prevent or suppress the lens or the eyeglass rim from pivotally rotating downward about the earpiece part so that the state in which a lens without the eyeglass rim, an eyeglass rim without a bridge, or a bridge is separated from the nose is maintained.

The eyeglass temple rotation preventing part may include a bent extending portion extending from the lower portion maintaining part toward a peripheral surface at a rear side of the ear and configured to support the eyeglass temple, which is in a state in which a lens without the eyeglass rim, an eyeglass rim without a bridge, or a bridge is separated from the nose, and an adhering support portion extending from the bent extending portion, adhered to at least one of a rear side and a lower side of the ear, and configured to firmly maintain the eyeglass temple in the state in which a lens without the eyeglass rim, an eyeglass rim without a bridge, or a bridge is separated from the nose.

The eyeglass temple rotation preventing part may include a reinforcing member protruding from a lower surface of the eyeglass temple length part or nose-separation earpiece part or from an upper surface of the lower portion maintaining part, supported by a peripheral surface at an upper portion of the ear, and configured to prevent the eyeglass temple from moving downward.

The eyeglass temple length part may include a front eyeglass temple length part at a side connected to the lens or the eyeglass rim and a rear eyeglass temple length part at a side connected to the earpiece part, and the eyeglasses may include a rotating part configured to adjust an angle of the rear eyeglass temple length part with respect to the front eyeglass temple length part and adjust a position at which the lens or the eyeglass rim is worn.

An overall length including the eyeglass temple length part and the earpiece part may be adjusted by a length adjusting part.

The rotating part may include a connector disposed at the front eyeglass temple length part to form a rib, an accommodating part formed at the rear eyeglass temple length part to accommodate the rib, and a pivot inserted into the rib placed in the accommodating part and the rear eyeglass temple length part and configured to allow rotation of the rear eyeglass temple length part with respect to the front eyeglass temple length part to maintain a state in which a position at which the eyeglass rim is worn is either close to or separated from the nose.

The earpiece part may include a nose-contact earpiece unit connected to the eyeglass temple length part and passing over the wearer's ear, and a nose-separation earpiece unit configured to make the position at which the eyeglass rim is worn to be different from the nose-contact earpiece unit to maintain a state of being separated from the wearer's nose when the nose-separation earpiece unit is connected to one or more of the eyeglass temple length part and the nose-contact earpiece unit and passes over the ear.

The eyeglasses may include a rotating part configured to allow rotation of the nose-separation earpiece unit with respect to the eyeglass temple length part or the nose-contact earpiece unit.

The nose-separation earpiece unit may include one or more nose-separation extending portions extending from the eyeglass temple length part or the nose-contact earpiece unit, and a nose-separation earpiece part extending from the nose-separation extending portion to be supported at a perimeter of the ear while the eyeglass rim is separated from the nose.

The nose-contact earpiece unit may include a nose-contact earpiece part formed to be supported at the perimeter of the ear while the eyeglass rim is placed within a front field of view of the eye, and a nose-contact connecting part configured to connect the nose-contact earpiece part to the eyeglass temple length part.

Any one of the nose-contact earpiece unit and the nose-separation earpiece unit may be mounted at an upper portion of the perimeter of the ear.

At least a portion of the nose-separation earpiece unit may be placed above the nose-contact earpiece unit.

When the eyeglasses are worn so that the nose-separation earpiece unit is supported at the upper side of the perimeter of the ear, the eyeglass rim may be placed above the field of view.

When the eyeglasses are worn so that the eyeglass rim is placed above and outside the field of view, the wearer's ear may be placed between the nose-separation earpiece unit and the nose-contact earpiece unit.

The rotating part may include a connector disposed at the nose-contact earpiece unit to form a protruding rib, and a pivot inserted into the rib and the nose-separation earpiece unit and configured to allow rotation of the nose-separation earpiece unit with respect to the nose-contact earpiece unit to maintain a state in which a position at which the eyeglass rim is worn is either separated from or is in contact with the nose.

The nose-separation earpiece unit may be rotated toward the nose-contact earpiece unit by the rotating part, and the nose-contact earpiece unit and the nose-separation earpiece unit may be placed to be in the vicinity of, or be adhered to a side of the head.

The eyeglass temple length part may include a front eyeglass temple length part at a side connected to the eyeglass rim and a rear eyeglass temple length part, the rear eyeglass temple length part may be formed of the nose-contact earpiece unit and the nose-separation earpiece unit, the front eyeglass temple length part may be connected to be rotatable to the rear eyeglass temple length part, and the nose-separation earpiece unit may pass over the ear as the front eyeglass temple length part is rotated at the rear eyeglass temple length part.

At least a portion of the nose-separation earpiece unit may be placed behind the nose-contact earpiece unit.

The nose-separation earpiece unit may be integrally formed with the nose-contact earpiece unit or the eyeglass temple length part, or may be detachably coupled to the nose-contact earpiece unit or the eyeglass temple length part.

The nose-contact earpiece unit may include a nose-contact earpiece part formed to be supported at the perimeter of the ear while the eyeglass rim is placed within a front field of view of the eye, and the nose-contact earpiece part may come into contact with at least one of a side of the wearer's face and the front side of the ear, and may support the eyeglass rim when the nose-separation earpiece part passes over the ear.

The eyeglass rim may be an edge of an eyeglass frame into which a lens is fitted or a border of a lens.

At least two of the eyeglass temple length part, the nose-separation extending portion, and the nose-separation earpiece part may be integrally formed.

At least two of the eyeglass temple length part, the nose-contact connecting part, and the nose-contact earpiece part may be integrally formed.

The rotating part may be rotated manually or by power of a motor, and the length adjusting part may adjust the length of the eyeglass temple length part or the earpiece part manually or by power of the motor.

The earpiece part may have an eyeglass temple rotation preventing part extending to prevent rotation of the eyeglass temple so that a state in which a position at which the eyeglass rim is worn is separated from the wearer's nose is maintained.

The eyeglass temple rotation preventing part may include a bent extending portion extending from the earpiece part to come into contact with the peripheral surface of the ear when the earpiece part comes into contact with a lower side of the ear, coming into contact with the peripheral surface of the ear and the head, and configured to support the eyeglass temple which is in the nose-separation state, and an adhering support portion extending from the bent extending portion, adhered to the rear side and the upper side of the ear, and configured to prevent rotation of the eyeglass temple, which is in the nose-separation state.

The lens may have auxiliary lenses extending therefrom and having different focal points, and when positions at which the eyeglasses are worn is adjusted by manipulating at least one of the earpiece part and the eyeglass temple length part, the auxiliary lenses may be placed within the field of view.

An eyeglass frame according to the present disclosure includes an eyeglass temple which is a portion connected to a lens or an eyeglass rim and passing over an ear, wherein the eyeglass temple includes an eyeglass temple length part, which is a longitudinal portion of the eyeglass temple connected to the lens or the eyeglass rim, and an earpiece part passing over the ear, and a state in which a position of the lens or the eyeglass rim is separated from a wearer's nose may be maintained.

By manipulating at least one of the earpiece part and the eyeglass temple length part, a position at which the lens or the eyeglass rim is worn on the wearer may be adjusted to be separated from the wearer's nose.

The earpiece part may include a nose-separation earpiece unit, and the nose-separation earpiece unit may include a nose-separation earpiece part connected to the eyeglass temple length part and passing over the wearer's ear, and a lower portion maintaining part formed by being connected to at least one of the eyeglass temple length part or the nose-separation earpiece part.

When supported by coming into contact with a front side of the ear, the lower portion maintaining part may maintain a state in which a lens without the eyeglass rim, an eyeglass rim without a bridge, or a bridge is separated from the nose or mitigate a pressure that is caused by the load of the eyeglass rim or lens and applied to the nose.

The earpiece part may have an eyeglass temple rotation preventing part extending to prevent the lens or the eyeglass rim from pivotally rotating downward about the earpiece part so that the state in which a lens without the eyeglass rim, an eyeglass rim without a bridge, or a bridge is separated from the nose is maintained.

The eyeglass temple rotation preventing part may include a bent extending portion extending from the lower portion maintaining part toward a peripheral surface at a rear side of the ear and configured to support the eyeglass temple, which is in a state in which a lens without the eyeglass rim, an eyeglass rim without a bridge, or a bridge is separated from the nose, and an adhering support portion extending from the bent extending portion, adhered to at least one of a rear side and a lower side of the ear, and configured to firmly maintain the eyeglass temple in the state in which a lens without the eyeglass rim, an eyeglass rim without a bridge, or a bridge is separated from the nose.

The eyeglass temple rotation preventing part may include a reinforcing member protruding from a lower surface of the eyeglass temple length part or nose-separation earpiece part or from an upper surface of the lower portion maintaining part, supported by a peripheral surface at an upper portion of the ear, and configured to prevent or suppress the eyeglass temple from moving downward.

The eyeglass temple length part may include a front eyeglass temple length part at a side connected to the lens or the eyeglass rim and a rear eyeglass temple length part at a side connected to the earpiece part, and the eyeglass frame may include a rotating part configured to adjust an angle of the front eyeglass temple length part with respect to the rear eyeglass temple length part and adjust a position at which the eyeglass rim is worn.

An overall length including the eyeglass temple length part and the earpiece part may be adjusted by a length adjusting part.

The earpiece part may include a nose-contact earpiece unit connected to the eyeglass temple length part and passing over the wearer's ear, and a nose-separation earpiece unit configured to make the position at which the eyeglass rim is worn to be different from the nose-contact earpiece unit to maintain a state of being separated from the wearer's nose when the nose-separation earpiece unit is connected to one or more of the eyeglass temple length part and the nose-contact earpiece unit and passes over the ear.

The eyeglass frame may include a rotating part configured to allow rotation of the nose-separation earpiece unit with respect to the eyeglass temple length part or the nose-contact earpiece unit.

The nose-separation earpiece unit may include one or more nose-separation extending portions extending from the eyeglass temple length part or the nose-contact earpiece unit, and a nose-separation earpiece part extending from the nose-separation extending portion to be supported at a perimeter of the ear while the eyeglass rim is separated from the nose and placed outside a front field of view of the eye.

The nose-contact earpiece unit may include a nose-contact earpiece part formed to be supported at the perimeter of the ear while the eyeglass rim comes into contact with the wearer's nose and is placed within a front field of view of the eye, and a nose-contact connecting part configured to connect the nose-contact earpiece part to the eyeglass temple length part.

The earpiece part may have an eyeglass temple rotation preventing part extending to prevent or suppress rotation of the eyeglass temple so that a state in which a position at which the eyeglass rim is worn is separated from the wearer's nose and is placed outside the field of view is maintained.

The eyeglass temple rotation preventing part may include a bent extending portion extending from the earpiece part to come into contact with the peripheral surface of the ear when the earpiece part comes into contact with a lower side of the ear, coming into contact with the peripheral surface of the ear and the head, and configured to support the eyeglass temple which is in the nose-separation state, and an adhering support portion extending from the bent extending portion, adhered to the rear side and the upper side of the ear, and configured to prevent rotation of the eyeglass temple, which is in the nose-separation state.

The lens may have auxiliary lenses extending therefrom and having different focal points, and when positions at which the eyeglasses are worn is adjusted by manipulating at least one of the earpiece part and the eyeglass temple length part, the auxiliary lenses may be placed within the field of view.

A nose-separation earpiece unit according to the present disclosure includes an earpiece part coupled to an eyeglass temple, which is a portion connected to a lens of the eyeglasses or an eyeglass rim and passing over an ear, and configured to vary a portion passing over the ear and adjust a position at which the eyeglass rim is worn, wherein a position at which the lens or the eyeglass rim is worn on a wearer may be adjusted by manipulating the earpiece part.

The nose-separation earpiece unit may further include an eyeglass temple length part, which is a longitudinal portion of the eyeglass temple connected to the eyeglass rim.

The eyeglass temple length part may include a front eyeglass temple length part at a side connected to the lens or the eyeglass rim and a rear eyeglass temple length part at a side connected to the earpiece part, and the nose-separation earpiece unit may include a rotating part configured to adjust an angle of the front eyeglass temple length part with respect to the rear eyeglass temple length part and adjust a position at which the lens or the eyeglass rim is worn.

An overall length including the eyeglass temple length part and the earpiece part may be adjusted by a length adjusting part.

Separate from a nose-contact earpiece unit connected to the eyeglass temple length part and passing over a wearer's ear, when the nose-separation earpiece unit is connected to one or more of the eyeglass temple length part and the nose-contact earpiece unit and passes over the ear, a position at which the eyeglass rim is worn may be made different from the nose-contact earpiece unit, and a state in which the nose-separation earpiece unit is separated from the wearer's nose may be maintained.

The nose-separation earpiece unit may include a rotating part configured to allow rotation of the nose-separation earpiece unit with respect to the eyeglass temple length part or the nose-contact earpiece unit.

The nose-separation earpiece unit may include one or more nose-separation extending portions extending from the eyeglass temple length part or the nose-contact earpiece unit, and a nose-separation earpiece part extending from the nose-separation extending portion to be supported at a perimeter of the ear while the eyeglass rim is separated from the wearer's nose.

The nose-contact earpiece unit may include a nose-contact earpiece part formed to be supported at the perimeter of the ear while the eyeglass rim is placed within a front field of view of the eye, and a nose-contact connecting part configured to connect the nose-contact earpiece part to the eyeglass temple length part.

Any one of the nose-contact earpiece unit and the nose-separation earpiece unit may be mounted and fixed at an upper portion of the perimeter of the ear, at least a portion of the nose-separation earpiece unit may be placed above the nose-contact earpiece unit, and when the eyeglasses are worn so that the nose-separation earpiece unit is supported at the upper side of the perimeter of the ear, the eyeglass rim may be separated from the wearer's nose.

When the eyeglasses are worn so that the eyeglass rim is placed above and outside the field of view, the wearer's ear may be placed between the nose-separation earpiece unit and the nose-contact earpiece unit.

The eyeglass temple length part may include a front eyeglass temple length part at a side connected to the eyeglass rim and a rear eyeglass temple length part, the rear eyeglass temple length part may be formed of the nose-contact earpiece unit and the nose-separation earpiece unit, the front eyeglass temple length part may be connected to be rotatable to the rear eyeglass temple length part, and the nose-separation earpiece unit may pass over the ear as the front eyeglass temple length part is rotated at the rear eyeglass temple length part.

The earpiece part may have an eyeglass temple rotation preventing part extending to prevent or suppress rotation of the eyeglass temple so that a state in which a position at which the eyeglass rim is worn is separated from the wearer's nose is maintained.

The eyeglass temple rotation preventing part may include a bent extending portion extending from the earpiece part to come into contact with the peripheral surface of the ear when the earpiece part comes into contact with a lower side of the ear, coming into contact with the peripheral surface of the ear and the head, and configured to support the eyeglass temple which is in the nose-separation state, and an adhering support portion extending from the bent extending portion, adhered to the rear side and the upper side of the ear, and configured to prevent rotation of the eyeglass temple, which is in the nose-separation state.

### Advantageous Effects

As described above, in a nose-separation earpiece unit, an eyeglass frame having the same, and eyeglasses having the same according to the present disclosure, unlike the related art, a separate earpiece is further included at an existing earpiece passing over the ear when the eyeglasses are worn such that positions at which the eyeglasses are worn may be varied, and the eyeglasses may be worn even when the eyeglasses are separated from a main part of face to wash or apply makeup or when things are viewed without a lens due to having myopia or the like, thereby decreasing the number of times of performing motion of completely removing the eyeglasses, reducing inconvenience of having to find a place for putting removed eyeglasses, and preventing loss of the eyeglasses.

In the present disclosure, at least one of earpieces separate from an existing earpiece may be detached from an eyeglass temple length part, thereby reducing maintenance and repair costs.

Further, in the present disclosure, the separate earpiece may be folded to or unfolded from the existing earpiece, thereby providing convenience to a wearer. Description of Drawings
FIG. 1 is a perspective view of eyeglasses according to a first embodiment of the present disclosure.
FIG. 2 is a side view illustrating a state of the eyeglasses worn from the front according to the first embodiment of the present disclosure.
FIG. 3 is a side view illustrating a state in which the eyeglasses according to the first embodiment of the present disclosure are worn while being lifted.
FIG. 4 is an exploded perspective view of an earpiece part of the eyeglasses according to the first embodiment of the present disclosure.
FIG. 5 is a rear exploded perspective view of the earpiece part according to the first embodiment of the present disclosure.
FIG. 6 is a cross-sectional view of the earpiece part according to the first embodiment of the present disclosure.
FIG. 7 is a perspective view of eyeglasses according to a second embodiment of the present disclosure.
FIG. 8 is a side view illustrating a state of the eyeglasses worn from the front according to the second embodiment of the present disclosure.
FIG. 9 is a side view illustrating a state in which the eyeglasses according to the second embodiment of the present disclosure are worn while being lifted.
FIG. 10 is an exploded perspective view of an earpiece part of the eyeglasses according to the second embodiment of the present disclosure.
FIG. 11 is a perspective view of the eyeglasses being worn from the front according to a third embodiment of the present disclosure.
FIG. 12 is a perspective view of the eyeglasses being worn while being lifted according to the third embodiment of the present disclosure.
FIG. 13 is an exploded perspective view of a main part of a rotating part of the eyeglasses according to the third embodiment of the present disclosure.
FIG. 14 is an exploded perspective view of a length adjusting part of an eyeglass temple part according to the third embodiment of the present disclosure.
FIG. 15 is a cross-sectional view of the eyeglass temple according to the third embodiment of the present disclosure.
FIG. 16 is a cross-sectional view illustrating an operational state of the rotating part of the eyeglasses according to the third embodiment of the present disclosure.
FIG. 17 is a cross-sectional view of the length adjusting part according to the third embodiment of the present disclosure.
FIG. 18 is a perspective view of eyeglasses being worn from the front according to a fourth embodiment of the present disclosure.
FIG. 19 is a perspective view of the eyeglasses being worn while being lifted according to the fourth embodiment of the present disclosure.
FIG. 20 is an exploded perspective view of a main part of the rotating part of the eyeglasses according to the fourth embodiment of the present disclosure.
FIG. 21 is a cross-sectional view of the rotating part according to the fourth embodiment of the present disclosure.
FIG. 22 is a side view of eyeglasses being worn from the front according to a fifth embodiment of the present disclosure.
FIG. 23 is a side view of the eyeglasses being worn while being lifted according to the fifth embodiment of the present disclosure.
FIG. 24 is a side view of eyeglasses being worn from the front according to a sixth embodiment of the present disclosure.
FIG. 25 is a side view of the eyeglasses being worn while being lifted according to the sixth embodiment of the present disclosure.
FIG. 26 is a perspective view of eyeglasses according to a seventh embodiment of the present disclosure.
FIG. 27 is a side view illustrating a state of the eyeglasses worn from the front according to the seventh embodiment of the present disclosure.
FIG. 28 is a side view illustrating a state in which the eyeglasses according to the seventh embodiment of the present disclosure are worn while being lifted.
FIG. 29 is a perspective view of eyeglasses according to an eighth embodiment of the present disclosure.
FIG. 30 is a side view illustrating a state in which the eyeglasses according to the eighth embodiment of the present disclosure are worn.

### Modes of the Invention

Hereinafter, embodiments of a nose-separation earpiece unit, an eyeglass frame having the same, and eyeglasses having the same according to the present disclosure will be described with reference to the accompanying drawings. In such a process, thicknesses of lines, sizes of elements, or the like illustrated in the drawings may be exaggerated for clarity of description and convenience. Terms used below are terms defined in consideration of functions in the present disclosure and may be changed according to an intention or practice of an operator or manager. Therefore, the terms should be defined on the basis of the content throughout the present specification.

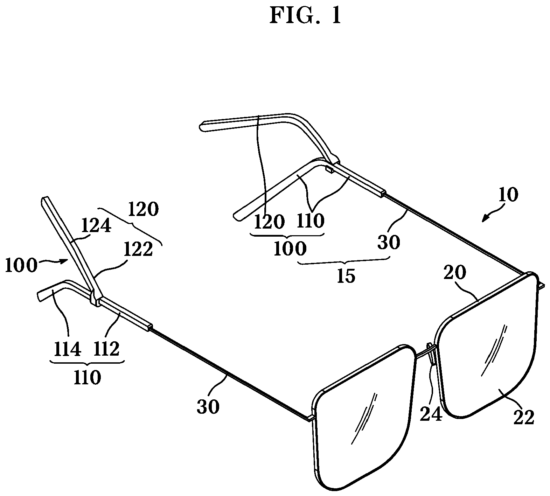

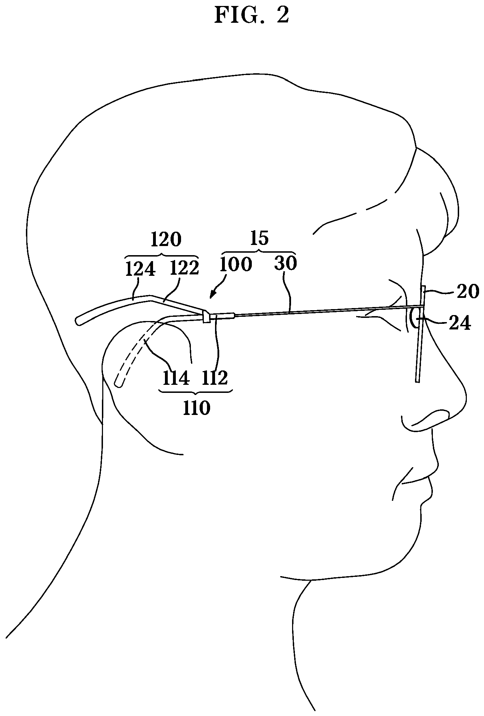

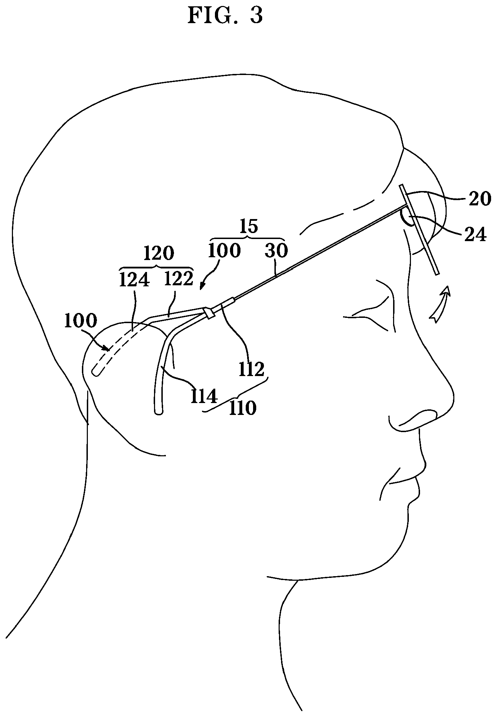

FIG. 1 is a perspective view of eyeglasses according to a first embodiment of the present disclosure, FIG. 2 is a side view illustrating a state of the eyeglasses worn from the front according to the first embodiment of the present disclosure, and FIG. 3 is a side view illustrating a state in which the eyeglasses according to the first embodiment of the present disclosure are worn while being lifted.

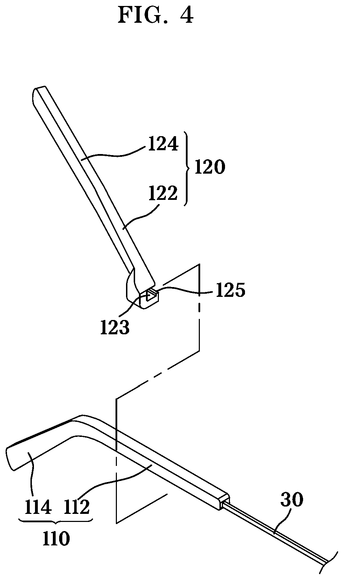

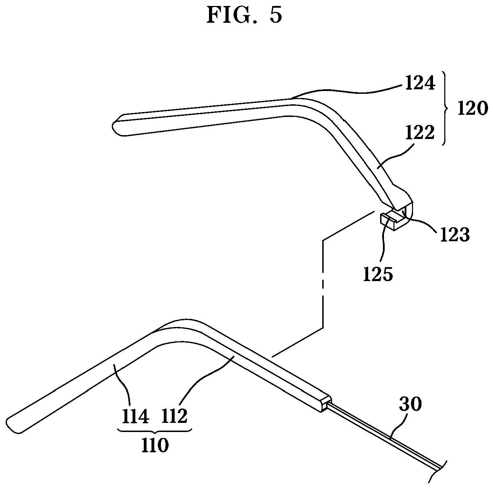

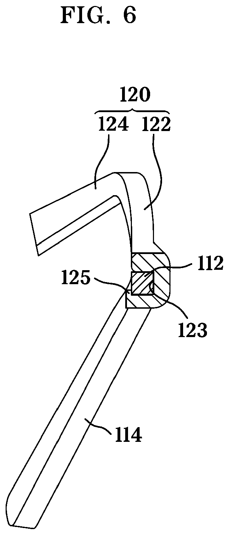

FIG. 4 is an exploded perspective view of an earpiece part of the eyeglasses according to the first embodiment of the present disclosure, FIG. 5 is a rear exploded perspective view of the earpiece part according to the first embodiment of the present disclosure, and FIG. 6 is a cross-sectional view of the earpiece part according to the first embodiment of the present disclosure.

As illustrated in FIGS. 1 to 6, eyeglasses 10 according to the first embodiment of the present disclosure include an eyeglass rim 20, an eyeglass temple length part 30, and an earpiece part 100.

An eyeglass temple 15, which is a portion connected to the eyeglass rim 20 and passing over a wearer's ear, includes the eyeglass temple length part 30, which is a longitudinal portion of the eyeglass temple 15 connected to the eyeglass rim 20, and the earpiece part 100, which is a portion passing over the ear.

The eyeglass temple length part 30 is disposed at the eyeglass rim 20 at each of both sides. Here, the eyeglass temple length part 30 may be fixed to a rear surface of the eyeglass rim 20 or assembled to be rotatable to the eyeglass rim 20 at each of the both sides such that the eyeglass temple length part 30 is folded or unfolded to be worn over a wearer's ear.

The eyeglass rim 20 comes into contact with a pair of lenses 22. The lens 22 serves to correct hyperopia, myopia, presbyopia, or the like for the wearer of the eyeglasses 10. Thus, the eyeglass rim 20 is disposed to entirely or partially surround a border of the lens 22.

The eyeglass rim 20 may be a border of an eyeglass frame surrounding the lens 22 or a border of the lens 22 without an eyeglass frame. For convenience, the eyeglass rim 20 is illustrated as an eyeglass frame surrounding the entire peripheral surface of the lens 22.

Further, the eyeglass rim 20 includes a bridge 24 disposed at a position adjacent to the lens 22. The bridge 24 comes into contact with the wearer's nose when the eyeglasses 10 are worn from the front. Here, being "worn from the front" refers to a state in which the wearer's eye corresponding to the lens 22 is placed in front of the lens 22.

Various shapes and materials may be applied to the eyeglass rim 20, the lens 22, the bridge 24, and the eyeglass temple length part 30.

The earpiece part 100 passes over the ear when the eyeglasses 10 are worn and serves to prevent the eyeglass rim 20 from being moved downward or removed. Here, the eyeglass rim 20 is prevented from being moved downward or removed by the earpiece part 100 and the bridge 24.

The earpiece part 100 is included in the eyeglass temple 15 and serves to vary a portion passing over the ear and adjust a position at which the eyeglass rim 20 is worn.

The earpiece part 100 includes a nose-contact earpiece unit 110.

Here, "nose-contact" refers to a state in which any one of the bridge 24, the eyeglass rim 20, and the lens 22 comes into contact with a portion of the wearer's nose.

The nose-contact earpiece unit 110 is connected to the eyeglass temple length part 30 and passes over the ear. Here, the nose-contact earpiece unit 110 passes over the ear when the eyeglasses 10 are worn from the front, as normal. Here, being "worn from the front, as normal" refers to a state in which the bridge 24 comes into contact with both sides of a nasal bridge.

The nose-contact earpiece unit 110 may be disposed at one side of at least one of the pair of eyeglass temple length parts 30. For convenience, the nose-contact earpiece unit 110 is illustrated as being disposed at one side of each of the pair of eyeglass temple length parts 30.

Particularly, the nose-contact earpiece unit 110 includes a nose-contact connecting part 112 and a nose-contact earpiece part 114. Here, the nose-contact connecting part 112 may be integrally formed with the nose-contact earpiece part 114. Likewise, the eyeglass temple length part 30 may be integrally formed with the nose-contact connecting part 112.

The nose-contact earpiece unit 110 extends from the eyeglass temple length part 30 in an axial direction. Thus, the nose-contact earpiece part 114 comes into contact with an upper side of the ear when the eyeglasses 10 are worn from the front, as normal.

The nose-contact earpiece part 114 extends from the nose-contact connecting part 112. Thus, the nose-contact earpiece part 114 is supported at the ear while the lens 22 disposed at the eyeglass rim 20 is placed in a front field of view of the wearer's eye. Particularly, the nose-contact earpiece part 114 may be formed along an arc-shaped trajectory to surround a rear side of the ear, extend in a straight line from the nose-contact connecting part 112, or be formed in a linear shape while being bent. That is, the nose-contact earpiece part 114 is formed in various shapes and passes over the upper side of the ear.

Accordingly, when the eyeglasses 10 are worn from the front, the nose-contact earpiece part 114 passes over the ear such that the eyeglasses 10 are not easily removed.

Here, at least a portion of the nose-separation earpiece unit 120, which is an out-of-field-of-view earpiece unit that causes the eyeglass lens to be placed outside the wearer's field of view, is placed above the nose-contact earpiece unit 110, which is a within-field-of-view earpiece unit that causes the eyeglass lens to be placed within the wearer's field of view.

The nose-contact connecting part 112 may be integrally manufactured with the corresponding eyeglass temple length part 30 or may be detachably coupled to the corresponding eyeglass temple length part 30 by screw coupling or the like.

Here, at least two of the eyeglass temple length part 30, the nose-contact connecting part 112, and the nose-contact earpiece part 114 may be integrally formed.

The eyeglasses 10 should be worn by the wearer even when the wearer separates the eyeglasses from a main part of his or her face to wash or apply makeup, or when things are viewed without a lens due to having myopia or the like, in order for avoiding large motion of completely removing the eyeglasses, reducing inconvenience of having to find a place to put removed eyeglasses, and preventing loss of the eyeglasses.

Thus, the earpiece part 100 includes the nose-separation earpiece unit 120.

Here, "separation" of the "nose-separation" refers to a state in which any one of the bridge 24, the eyeglass rim 20, and the lens 22 is not in contact with a portion of the wearer's nose and is separated (spaced apart) therefrom, or a state in which any one of the bridge 24, the eyeglass rim 20, and the lens 22 is in contact with a portion of the wearer's nose but may at any time be separated from the portion of the nose and a pressure is reduced such that a load applied to the portion of the wearer's nose is decreased.

The nose-separation earpiece unit 120, which is connected to one or more of the eyeglass temple length part 30 and the nose-contact earpiece unit 110, serves to vary a portion passing over the ear and make a position at which the eyeglass rim 20 is worn to be different from the nose-contact earpiece unit 110.

That is, by utilizing the nose-separation earpiece unit 120, the wearer may stably wear the eyeglasses 10 at a position separated from the wearer's nose and deviated from the wearer's field of view, such as above the head, even when the wearer separates the eyeglasses 10 from a main part of his or her face to wash or apply makeup or when things are viewed without a lens due to having myopia or the like.

That is, separate from the nose-contact earpiece unit 110 extending from the eyeglass temple length part 30 and passing over the wearer's ear, the nose-separation earpiece unit 120 may make the position at which the eyeglass rim 20 is worn to be different from the nose-contact earpiece unit 110 when the nose-separation earpiece unit 120 is connected to one or more of the eyeglass temple length part 30 and the nose-contact earpiece unit 110, and passes over the ear.

Here, the nose-separation earpiece unit 120 includes a nose-separation extending portion 122 and a nose-separation earpiece part 124. Here, the nose-separation extending portion 122 may be integrally formed with the nose-separation earpiece part 124. Likewise, the eyeglass temple length part 30 may be integrally formed with the nose-separation extending portion 122.

One or more of the nose-separation extending portions 122 extend from the eyeglass temple length part 30 or the nose-contact earpiece unit 110. For convenience, the nose-separation extending portion 122 is assumed to be extending from the nose-contact connecting part 112. Particularly, the nose-separation extending portion 122 may extend at a slant in an axial direction of the eyeglass temple length part 30 or the nose-contact connecting part 112. Here, the eyeglass temple length part 30 and the nose-contact connecting part 112 may be arranged in a straight line.

The nose-separation earpiece part 124 extends from the nose-separation extending portion 122 to be supported at the ear while the lens 22 is separated from the wearer's nose and placed outside the front field of view of the wearer's eye. Thus, the nose-separation earpiece part 124 comes into contact with the upper side of the ear when the eyeglasses 10 are worn, such as when the eyeglasses 10 are lifted for washing the face. For convenience, hereinafter, a case in which the wearer wears the eyeglasses 10 while the eyeglasses 10 are placed at a position other than on the wearer's eye, will be limited to a case in which the eyeglasses 10 are worn while being lifted.

The nose-separation earpiece part 124 extends from the nose-separation extending portion 122. Thus, the nose-separation earpiece part 124 causes the eyeglasses to pass over the ear so that the lens 22 disposed at the eyeglass rim 20 is placed at a position other than that of the corresponding eye. Particularly, the nose-separation earpiece part 124 may be formed along an arc-shaped trajectory to surround the rear side of the ear, extend in a straight line from the nose-separation extending portion 122, or be formed in a linear shape while being bent. That is, the nose-separation earpiece part 124 is formed in various shapes and passes over the upper side of the ear.

In other words, the nose-separation earpiece part 124 extends from the nose-separation extending portion 122 to be supported at the perimeter of the ear while the eyeglass rim 20 is separated from the wearer's nose and placed outside the front field of view of the wearer's eye.

That is, the wearer selects between any one of the nose-contact earpiece unit 110 and the nose-separation earpiece unit 120, and mounts and fixes the selected unit to an upper portion of the perimeter of the ear, and at least a portion of the nose-separation earpiece unit 120 is placed above the nose-contact earpiece unit 110.

Here, at least two of the eyeglass temple length part 30, the nose-separation extending portion 122, and the nose-separation earpiece part 124 may be integrally formed.

When the eyeglasses 10 are worn so that the nose-separation earpiece unit 120 is supported at the upper side of the perimeter of the ear, the eyeglass rim 20 is separated from the wearer's nose and placed above the field of view.

Accordingly, when the eyeglasses 10 are worn in a state other than from the front, the nose-separation earpiece part 124 passes over the ear and fixes the position of the eyeglasses 10 such that the eyeglasses 10 may not easily be removed.

That is, the wearer may select between any one of the nose-contact earpiece unit 110 and the nose-separation earpiece unit 120, and mount and fix the selected one to the upper portion of the perimeter of the ear.

Particularly, at least a portion of the nose-separation earpiece unit 120 may be placed above the nose-contact earpiece unit 110. This is to allow the eyeglass temple length part 30 to be gradually tilted upward toward the eyeglass rim 20 as the nose-separation earpiece unit 120 is mounted at the perimeter of the ear.

Consequently, when the eyeglasses 10 are worn so that the eyeglass rim 20 is separated from the wearer's nose and placed above and outside the field of view, the wearer's ear is placed between the nose-separation earpiece unit 120 and the nose-contact earpiece unit 110.

In other words, either the nose-contact earpiece unit 110 or the nose-separation earpiece unit 120 is mounted at an upper portion of the perimeter of the ear.

Further, as the nose-separation extending portion 122 extends upward from the nose-contact connecting part 112, the nose-separation extending portion 122 and the nose-separation earpiece part 124 of the nose-separation earpiece unit 120 are placed above the nose-contact earpiece unit 110.

Here, when the eyeglasses 10 are worn so that the nose-separation earpiece unit 120 is supported at the upper side of the perimeter of the ear, the eyeglass rim 20 is placed above the field of view.

Particularly, when the eyeglasses 10 are worn so that the eyeglass rim 20 is placed above and outside the field of view, the wearer's ear is placed between the nose-separation earpiece unit 120 and the nose-contact earpiece unit 110.

The nose-separation extending portion 122 may be pivotally connected to a coupling point with the nose-contact connecting part 112, rotated in the circumferential direction when the eyeglasses are worn using the nose-separation extending portion 122, and fixed so that the eyeglasses 10 may be worn in such a way that the eyeglass rim 20 is placed above and outside the field of view.

The nose-separation extending portion 122 may be integrally manufactured with the eyeglass temple length part 30 or the nose-contact earpiece unit 110 corresponding thereto or may be detachably coupled to the eyeglass temple length part 30 or the nose-contact earpiece unit 110 corresponding thereto by screw coupling or the like.

The nose-contact earpiece unit 110 or the eyeglass temple length part 30 may be axially inserted into the nose-separation extending portion 122, the nose-contact earpiece unit 110 or the eyeglass temple length part 30 may have a polygonal or elliptical cross-section, and the nose-separation extending portion 122 may form an accommodating space portion 123 having the same cross-sectional shape as that of the nose-contact earpiece unit 110 or the eyeglass temple length part 30.

As an example, because the nose-contact connecting part 112 having a polygonal or elliptical cross-section, instead of a circular cross-section, is inserted into the nose-separation extending portion 122, and the nose-contact connecting part 112 is inserted into the accommodating space portion 123 having the same or similar cross-sectional shape as that of the nose-contact connecting part 112, rotation of the nose-separation extending portion 122 is prevented or suppressed in a circumferential direction of an axis of the nose-contact connecting part 112.

The nose-separation extending portion 122 may be axially inserted into the nose-contact connecting part 112.

The nose-separation extending portion 122 may have an insertion hole 125 connected to the accommodating space portion 123 so that the nose-contact earpiece unit 110 or the eyeglass temple length part 30 may be inserted thereinto. The nose-contact earpiece unit 110 or the eyeglass temple length part 30 is forcibly inserted into the insertion hole 125 and accommodated in the accommodating space portion 123.

Preferably, the nose-separation extending portion 122 is easily assembled to the nose-contact earpiece unit 110 or the eyeglass temple length part 30.

Further, although not illustrated, movement of the nose-separation extending portion 122 in the axial direction of the nose-contact connecting part 112 or the eyeglass temple length part 30 may be prevented by various means, and the position of the nose-separation extending portion 122 may be fixed so that rotation thereof about the axis of the nose-contact connecting part 112 or the eyeglass temple length part 30 is prevented. The nose-separation extending portion 122 may be locked to a connection portion of the nose-contact earpiece part 114 bent from the nose-contact connecting part 112, and deviation of the nose-separation extending portion 122 in the axial direction of the nose-contact connecting part 112 may be prevented.

Because the bridge 24 comes into contact with the wearer's nose and supports the eyeglass rim 20, the eyeglasses do not easily move towards a lower portion of the wearer's face when the wearer wears the eyeglasses 10 from the front

In a case in which the eyeglasses 10 are in a lifted position when worn, which is a state in which the nose-separation earpiece part 124 passes over the ear, although the nose-separation earpiece part 124 fixes the position of the eyeglass rim 20 so that the eyeglass rim 20 does not move towards the lower portion of the wearer's face, the bridge 24 is separated from the wearer's nose and is unable to prevent the eyeglass rim 20 from being moved towards the lower portion of the wearer's face.

Consequently, when the nose-separation earpiece unit 120 passes over the wearer's ear and the eyeglasses 10 are in a lifted position when worn, the nose-contact earpiece unit 110 may come into contact with the front side of the ear and support the eyeglass rim 20 while the nose-separation earpiece unit 120 passes over the wearer's ear, and the eyeglass rim 20 does not easily move downward from the head or face.

Particularly, when the nose-separation earpiece part 124 passes over the ear, the nose-contact earpiece unit 110 may come into contact with at least one of a side of the wearer's face and the front side of the ear and support the eyeglass rim 20.

Further, the nose-separation earpiece unit 120 may be formed of a flexible material to be deformed according to the shape of the wearer's ear. The nose-separation earpiece unit 120 may be formed of various materials.

The nose-separation earpiece unit 120 may be detachably coupled to the eyeglass temple length part 30.

Particularly, the earpiece part 100 is formed to be inclined to be adhered to the side of the head. Specifically, the nose-contact earpiece part 114 and the nose-separation earpiece part 124 extend inwardly at a slant to be adhered to the side of the head and maintain the positions of the eyeglass rim 20 and the lens 22.

Although not illustrated, an eyeglass frame may be included in the eyeglasses 10 including the eyeglass rim 20, the eyeglass temple length part 30 connected to the eyeglass rim 20, and the earpiece part 100 disposed at one side of the eyeglass temple length part 30 and configured to vary a portion passing over the ear and adjust a position at which the eyeglass rim 20 is worn.

Particularly, in a case of rimless glasses without an eyeglass frame at the perimeter of the lens 22, the eyeglass rim 20 may serve as a border of the lens 22 and connect the eyeglass temple length part 30.

The earpiece part 100 may be detachably coupled to the eyeglass temple length part 30.

The nose-separation earpiece unit 120 may be formed of a flexible material to be deformed according to the shape of the wearer's ear.

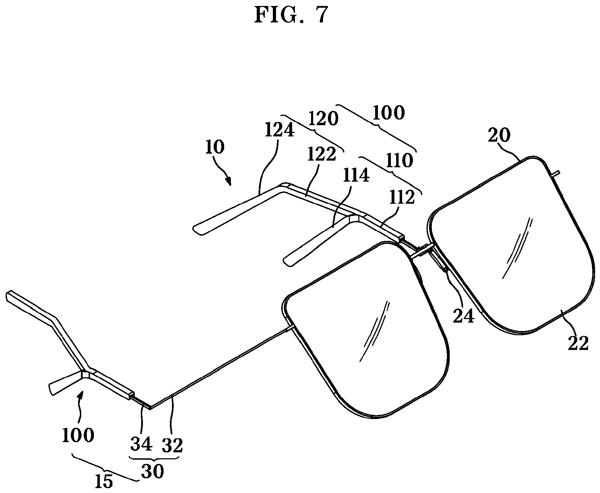

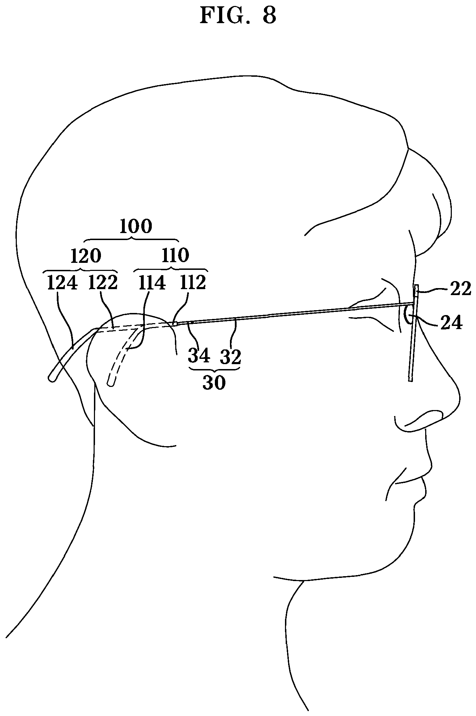

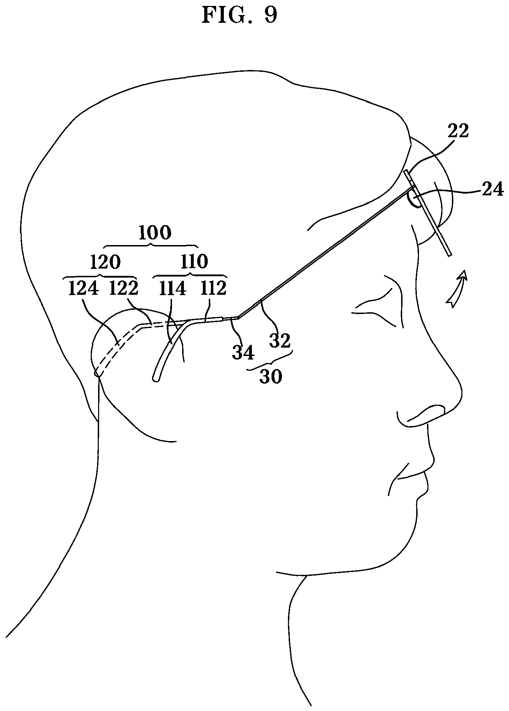

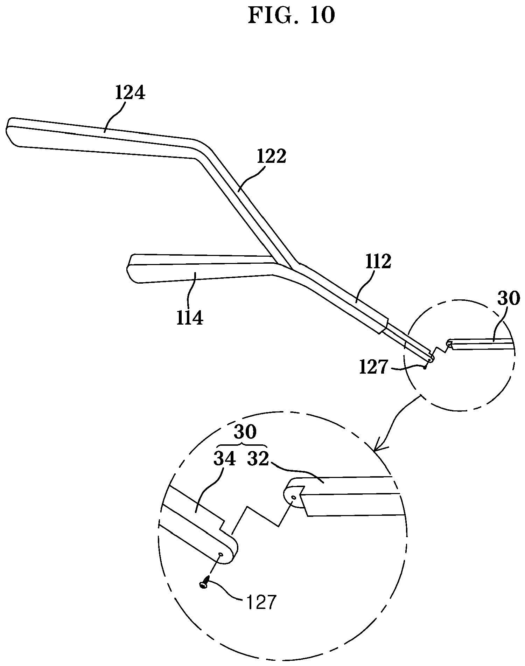

FIG. 7 is a perspective view of eyeglasses according to a second embodiment of the present disclosure, FIG. 8 is a side view illustrating a state of the eyeglasses worn from the front according to the second embodiment of the present disclosure, FIG. 9 is a side view illustrating a state in which the eyeglasses according to the second embodiment of the present disclosure is worn while being lifted, and FIG. 10 is an exploded perspective view of an earpiece part of the eyeglasses according to the second embodiment of the present disclosure.

As illustrated in FIGS. 7 to 10, the eyeglasses 10 according to a second embodiment of the present disclosure includes the eyeglass rim 20, the eyeglass temple length part 30, and the earpiece part 100.

The eyeglass temple 15, which is a portion connected to the eyeglass rim 20 and passing over a wearer's ear, includes the eyeglass temple length part 30, which is a longitudinal portion of the eyeglass temple connected to the eyeglass rim 20, and the earpiece part 100, which is a portion passing over the ear.

Refer to the above description for descriptions of the eyeglass rim 20 and the eyeglass temple length part 30.

The eyeglass rim 20 may be an eyeglass frame surrounding the lens 22 or a border of the lens 22. For convenience, the eyeglass rim 20 is illustrated as surrounding the entire peripheral surface of the lens 22.

As described above, the earpiece part 100 includes the nose-contact earpiece unit 110 and the nose-separation earpiece unit 120.

As described above, the nose-contact earpiece unit 110 includes the nose-contact connecting part 112 and the nose-contact earpiece part 114, and the nose-separation earpiece unit 120 includes the nose-separation extending portion 122 and the nose-separation earpiece part 124.

The nose-contact earpiece unit 110 and the nose-separation extending portion 122 may be integrally formed or may be coupled to each other.

The nose-separation extending portion 122 may be integrally formed with the nose-separation earpiece part 124. Likewise, the eyeglass temple length part 30 may be integrally formed with the nose-separation extending portion 122.

The eyeglass temple length part 30 includes a front eyeglass temple length part 32, which is a portion connected to the eyeglass rim 20, and a rear eyeglass temple length part 34, which is a portion connected to the front eyeglass temple length part 32 and connected to the earpiece part 100.

The earpiece part 100 connected to the rear eyeglass temple length part 34 includes the nose-contact earpiece unit 110 and the nose-separation earpiece unit 120.

The nose-contact connecting part 112 extends in an axial direction of the eyeglass temple length part 30, and the nose-contact earpiece part 114 extends from the nose-contact connecting part 112. Thus, the nose-contact earpiece part 114 is supported at the ear while the lens 22 disposed at the eyeglass rim 20 is placed within the front field of view of the wearer's eye. Particularly, the nose-contact earpiece part 114 may be formed along an arc-shaped trajectory to surround a rear side of the ear, may extend in a straight line from the nose-contact connecting part 112, or be formed in a linear shape while being bent. That is, the nose-contact earpiece part 114 is formed in various shapes and passes over the upper side of the ear.

Accordingly, when the eyeglasses 10 are worn from the front, the nose-contact earpiece part 114 passes over the ear such that the eyeglasses 10 may not easily be removed.

Here, at least a portion of the nose-separation earpiece unit 120 is placed behind the nose-contact earpiece unit 110.

Particularly, the earpiece part 100 is formed to be inclined to be adhered to the side of the head. That is, the nose-contact earpiece part 114 of the nose-contact earpiece unit 110 and the nose-separation extending portion 122 and the nose-separation earpiece part 124 of the nose-separation earpiece unit 120 extend to be inclined toward the side of the head and are adhered to the side of the head.

When the nose-separation earpiece unit 120 passes over the wearer's ear, the nose-contact earpiece unit 110 comes into contact with at least one of a side of the wearer's face and the front side of the ear and supports the eyeglass rim 20.

The nose-separation extending portion 122 extends in the axial direction of the eyeglass temple length part 30 or the nose-contact connecting part 112, and the nose-separation extending portion 122 extends to be inclined with respect to the axial direction of the nose-contact connecting part 112. The nose-contact earpiece part 114 extends from the nose-separation extending portion 122.

Thus, when the wearer rotates the front eyeglass temple length part 32 of the eyeglasses 10 using a binding pin 127 or the like, and the eyeglasses 10 are worn while being lifted, the nose-separation extending portion 122 and the nose-separation earpiece part 124 may surround a front upper portion, the upper side, and a rear upper portion of the ear, the eyeglass rim 20 may be adhered to the head, forehead, or the like, and the position of the eyeglass rim 20 may be fixed. Here, the nose-separation earpiece part 124 is supported at the ear while the lens 22 is separated from the wearer's nose and placed within the front field of view of the wearer's eye.

The nose-contact connecting part 112 and the nose-separation extending portion 122 may also be arranged in a straight line.

Any one of the nose-contact earpiece unit 110 and the nose-separation earpiece unit 120 is mounted on the upper portion of the perimeter of the ear, and the nose-separation extending portion 122 and the nose-separation earpiece part 124 of the nose-separation earpiece unit 120 are placed above the nose-contact earpiece part 114 of the nose-contact earpiece unit 110. Here, when the eyeglasses 10 are worn so that the nose-separation earpiece unit 120 is supported at the upper side of the perimeter of the ear, the eyeglass rim 20 is placed above the field of view.

Particularly, the nose-separation earpiece part 124 of the nose-separation extending portion 122 is placed behind the nose-contact earpiece part 114 of the nose-contact earpiece unit 110.

The nose-separation earpiece unit 120 may be detachably coupled to the nose-contact earpiece unit 110 by screw coupling or the like. In this case, when the nose-separation earpiece unit 120 is damaged or deformed, it is easy to perform maintenance and repair thereof. As an example, the nose-separation earpiece unit 120 may be detachably coupled to the nose-contact earpiece unit 110 by a mechanical fastening element such as a bolt.

The front eyeglass temple length part 32 and the rear eyeglass temple length part 34 are connected by the binding pin 127 or the like to be rotatable.

When the eyeglasses 10 are worn so that the nose-separation earpiece unit 120 passes over the ear, the front eyeglass temple length part 32 may be rotated from the rear eyeglass temple length part 34 by using the binding pin 127 or the like, and the eyeglass rim 20 connected to the front eyeglass temple length part 32 may be prevented from being separated much from the wearer's face.

That is, at least a portion of the nose-separation earpiece unit 120 is placed behind the nose-contact earpiece unit 110, and when the nose-separation earpiece unit 120 passes over the ear, the nose-contact earpiece unit 110 comes into contact with the front side of the wearer's ear and supports the eyeglass rim 20.

The number of nose-separation earpiece parts 124 is not limited.

The earpiece part 100 may be detachably coupled to the eyeglass temple length part 30.

The nose-separation earpiece unit 120 may be formed of a flexible material so that the nose-separation earpiece unit 120 may be deformed according to the shape of the wearer's ear.

Although not illustrated, an eyeglass frame may be included in the eyeglasses 10 including the eyeglass rim 20, the eyeglass temple length part 30 connected to the eyeglass rim 20, and the earpiece part 100 disposed at one side of the eyeglass temple length part 30 and configured to vary a portion passing over the ear and adjust a position at which the eyeglass rim 20 is worn. Particularly, in a case of rimless glasses without an eyeglass frame at the perimeter of the lens 22, the eyeglass rim 20 may be a border of the lens 22 and connect the eyeglass temple length part 30.

Refer to the above description for undescribed reference numerals.

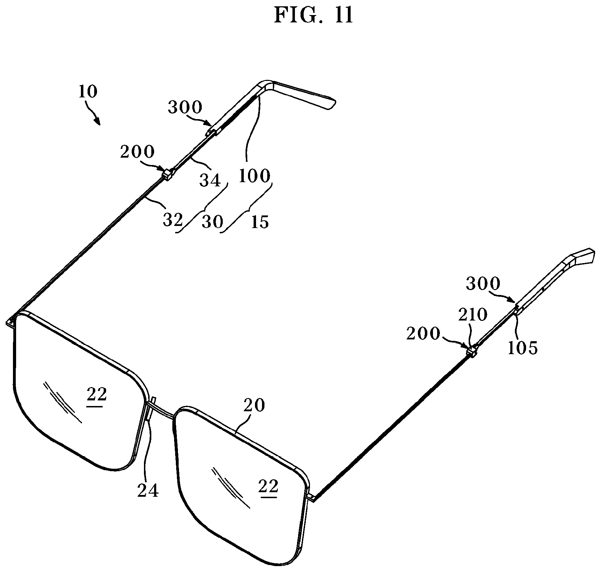

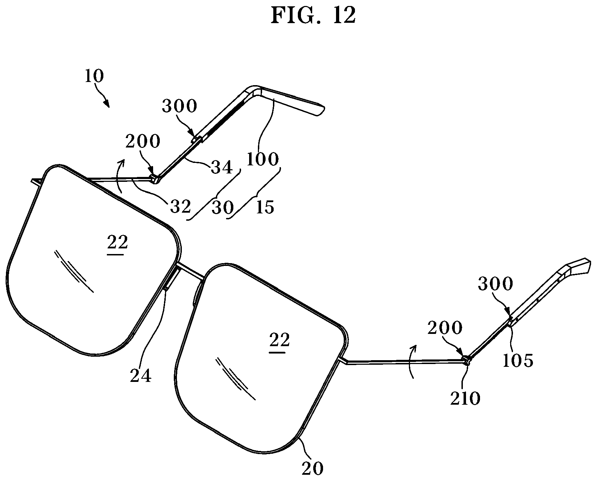

FIG. 11 is a perspective view of eyeglasses being worn from the front according to a third embodiment of the present disclosure, and FIG. 12 is a perspective view of the eyeglasses being worn while being lifted according to the third embodiment of the present disclosure.

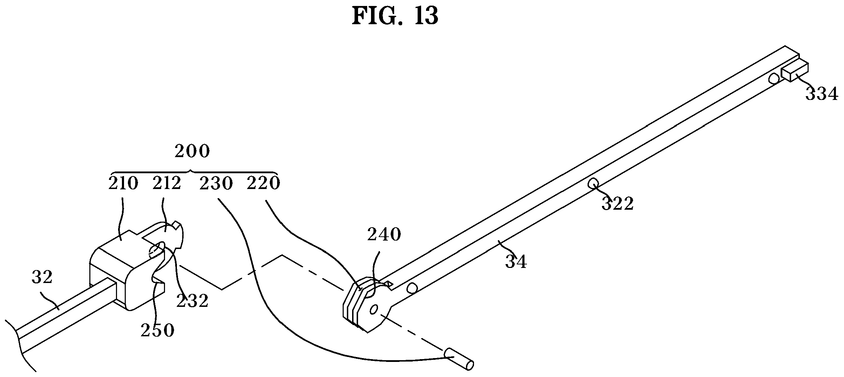

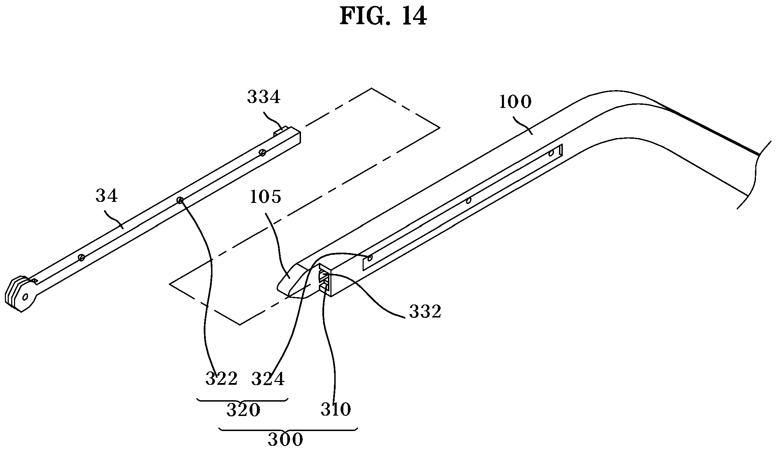

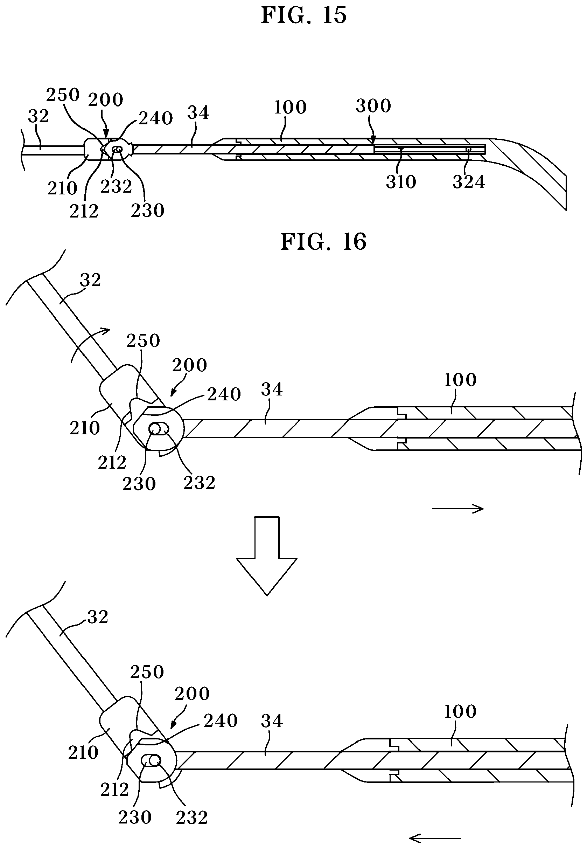

FIG. 13 is an exploded perspective view of a main part of a rotating part of the eyeglasses according to the third embodiment of the present disclosure, FIG. 14 is an exploded perspective view of a length adjusting part of an eyeglass temple part according to the third embodiment of the present disclosure, and FIG. 15 is a cross-sectional view of an eyeglass temple according to the third embodiment of the present disclosure.

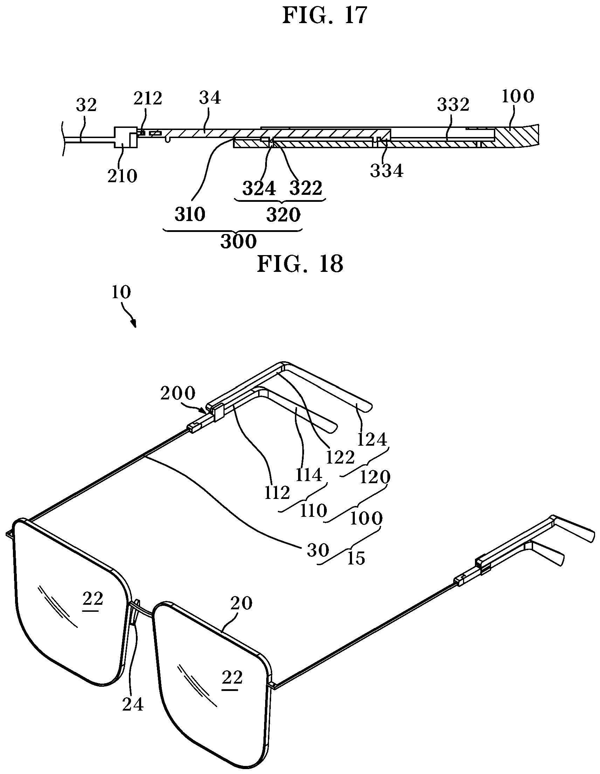

FIG. 16 is a cross-sectional view illustrating an operational state of the rotating part of the eyeglasses according to the third embodiment of the present disclosure, and FIG. 17 is a cross-sectional view of the length adjusting part according to the third embodiment of the present disclosure.

As illustrated in FIGS. 11 to 17, the eyeglasses 10 according to the third embodiment of the present disclosure includes the eyeglass rim 20, the eyeglass temple length part 30, and the earpiece part 100.

The eyeglass temple 15, which is a portion connected to the eyeglass rim 20 and passing over a wearer's ear, includes the eyeglass temple length part 30, which is a longitudinal portion of the eyeglass temple 15 connected to the eyeglass rim 20, and the earpiece part 100, which is a portion passing over the ear.

Particularly, by manipulating at least one of the earpiece part 100 and the eyeglass temple length part 30, a position at which the lens 22 or the eyeglass rim 20 is worn on the wearer may be adjusted.

The eyeglass temple length part 30 includes the front eyeglass temple length part 32 and the rear eyeglass temple length part 34.

The front eyeglass temple length part 32 is connected to the lens 22 or the eyeglass rim 20, and the rear eyeglass temple length part 34 is connected to the earpiece part 100.

The eyeglass temple length part 30 includes a rotating part 200.

The rotating part 200 serves to adjust an angle of the front eyeglass temple length part 32 with respect to the rear eyeglass temple length part 34 and to adjust the position at which the lens 22 or the eyeglass rim 20 is worn.

Particularly, the rotating part 200 includes a connector 210, an accommodating part 220, and a pivot 230.

The connector 210 is disposed at an end or border of the front eyeglass temple length part 32. The connector 210 has a rib 212 protruding toward the rear eyeglass temple length part 34. Shapes of the connector 210 and the rib 212 may be changed into various other shapes.

The accommodating part 220 is formed at the rear eyeglass temple length part 34 to accommodate the rib 212. The rib 212 may also be arranged to come into contact with a side (peripheral surface) of the rear eyeglass temple length part 34.

To be inserted into the rib 212 placed inside the accommodating part 220 and the rear eyeglass temple length part 34, and to allow rotation of the rear eyeglass temple length part 34 with respect to the front eyeglass temple length part 32, the pivot 230 is inserted into the rear eyeglass temple length part 34 and the rib 212. Here, the front eyeglass temple length part 32 is forcibly rotated with respect to the rear eyeglass temple length part 34. Accordingly, the pivot 230 serves to allow the position at which the eyeglass rim 20 is worn to be maintained in either of the nose-contact state or the nose-separation state.

The connector 210 from which the rib 212 protrudes may be disposed at the rear eyeglass temple length part 34, and the accommodating part 220 may be formed in the front eyeglass temple length part 32.

Further, the rotating part 200 may also be formed of the connector 210 and the pivot 230.

Here, when a binding force of the pivot 230 is weakened, or due to the self-loads of the eyeglass rim 20 and the lens 22, the front eyeglass temple length part 32 may be inclined upward by a predetermined angle with respect to an axial direction of the rear eyeglass temple length part 34, and then inclined downward.

To prevent this, the rear eyeglass temple length part 34 includes a first polygonal portion 240 formed along a polygonal trajectory at a peripheral surface, particularly, at the front side.

Further, the connector 210 has a second polygonal portion 250 formed to come into surface contact with and support the first polygonal portion 240 so that a state in which the angle of the front eyeglass temple length part 32 is adjusted with respect to the rear eyeglass temple length portion 34 is maintained.

Although not illustrated, the connector 210 of the rotating part 200 may be rotated with respect to the rear eyeglass temple length part 34 manually or by power of a motor.

While the first polygonal portion 240 and the second polygonal portion 250 are in surface contact, it may be difficult for the front eyeglass temple length part 32 to rotate with respect to the rear eyeglass temple length part 34.

Thus, the connector 210 or the rear eyeglass temple length part 34 into which the pivot 230 is inserted may have a slot hole 232 formed therein. Because the pivot 230 may be moved within the range of the slot hole 232, the connector 210 may be moved by the same distance as the pivot 230.

Consequently, as shown in FIG. 16, while the first polygonal portion 240 and the second polygonal portion 250 are separated, the first polygonal portion 240 and the second polygonal portion 250 are rotated and come into surface contact, and then rotation of the first polygonal portion 240 and the second polygonal portion 250 is prevented. Then, as the rear eyeglass temple length part 34 moves forward, the first polygonal portion 240 and the second polygonal portion 250 come into contact. Thus, arbitrary rotation of the front eyeglass temple length part 32 with respect to the rear eyeglass temple length part 34 is prevented.

For convenience, the slot hole 232 is assumed as being formed in the rib 212 of the connector 210.

Although not illustrated, the connector 210 of the rotating part 200 may be rotated with respect to the rear eyeglass temple length part 34 manually or by power of a motor.

An overall length including the eyeglass temple length part 30 and the earpiece part 100 may be adjusted by a length adjusting part 300.

For convenience, the length adjusting part 300 is assumed as being disposed at a connection portion between the rear eyeglass temple length part 34 and the earpiece part 100.

Here, the length adjusting part 300 includes an entrance/exit 310 and a restraining part 320.

The entrance/exit 310 has the rear eyeglass temple length part 34 inserted to be slidable thereinto and is recessed and formed in the axial direction in the earpiece part 100 to adjust a length to which the rear eyeglass temple length part 34 is exposed to the outside. The rear eyeglass temple length part 34 may have a border that is movable in the axial direction along a peripheral surface of the earpiece part 100.

The restraining part 320 serves to allow the rear eyeglass temple length part 34 to maintain a state of being inserted into or moved from the entrance/exit 310 by a set length.

As an example, the restraining part 320 includes a restraining protrusion 322 and a locking part 324.

One or more restraining protrusions 322 protrude in the axial direction of the rear eyeglass temple length part 34. Particularly, one or more restraining protrusions 322 protrude in the axial direction at the peripheral surface of the rear eyeglass temple length part 34, and the number and size of the restraining protrusions 322 are not limited. The shape of the restraining protrusions 322 may be changed into various other shapes.

The locking part 324 is formed at the earpiece part 100 corresponding to an inner surface of the entrance/exit 310 to accommodate the restraining protrusion 322 and fix the position of the rear eyeglass temple length part 34. Here, a single locking part 324 or a plurality of locking parts 324 may be formed according to the number of restraining protrusions 322.

Accordingly, as any restraining protrusion 322 or a single restraining protrusion 322 is locked to a single locking part 324 or any locking part 324, the rear eyeglass temple length part 34 is not inserted further into the earpiece part 100 or deviated to the outside of the earpiece part 100 due to a pulling force of a predetermined value or smaller. As a result, an overall length of the exposed rear eyeglass temple length part 34 and the earpiece part 100 may be set by the length adjusting part 300.

Various other means such as a hole, a groove, and an embossed portion may be applied to the restraining part 320.

Although not illustrated, the length adjusting part 300 may be manipulated so that the length of the eyeglass temple length part 30 or the earpiece part 100 is adjusted manually or by a driving force of a motor. That is, the rear eyeglass temple length part 34 may enter and exit the entrance/exit 310 of the earpiece part 100 manually or by a driving power of a motor.

Further, the earpiece part 100 may have a support member 105 extending to prevent the rear eyeglass temple length part 34 from being bent outward. The support member 105 serve to support an outer side of the rear eyeglass temple length part 34.

The rear eyeglass temple length part 34 should be stably reciprocated in the axial direction within a linear section of the earpiece part 100.

Accordingly, the earpiece part 100 has a guide groove 332 recessed and formed. Particularly, the guide groove 332 is recessed and formed in the axial direction at the inner surface of the entrance/exit 310.

A guide protrusion 334 that is linearly guided along the guide groove 332 protrudes from the rear eyeglass temple length part 34. Here, as the guide protrusion 334 is reciprocated along the guide groove 332, the guide protrusion 334 also serves as a stopper that prevents the rear eyeglass temple length part 34 from being completely deviated from the earpiece part 100.

Refer to the above description for undescribed reference numerals.

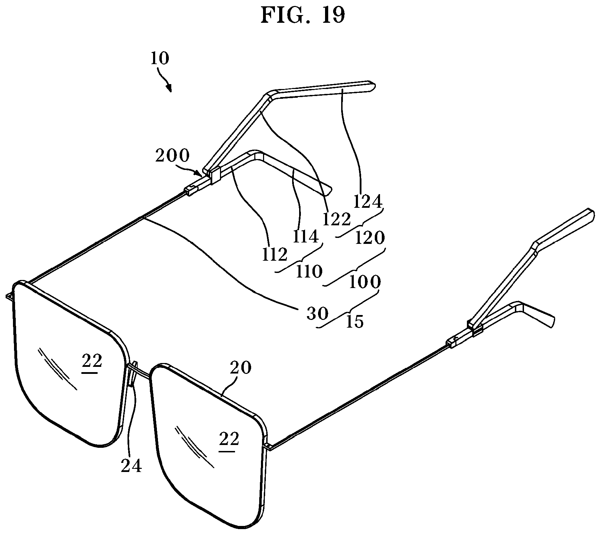

FIG. 18 is a perspective view of eyeglasses being worn from the front according to a fourth embodiment of the present disclosure, FIG. 19 is a perspective view of the eyeglasses being worn while being lifted according to the fourth embodiment of the present disclosure.

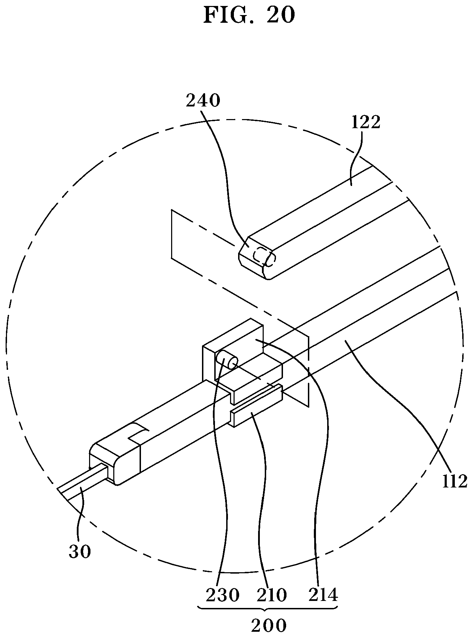

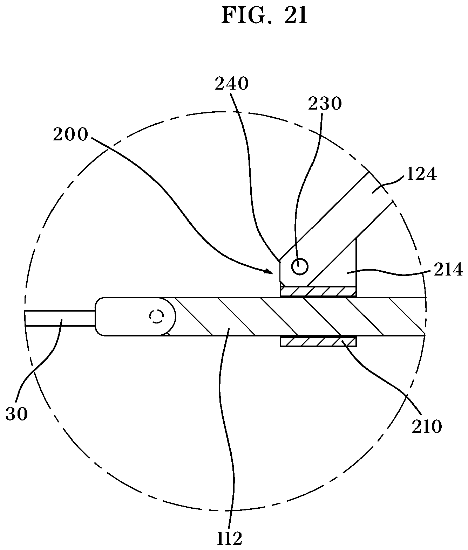

FIG. 20 is an exploded perspective view of a main part of the rotating part of the eyeglasses according to the fourth embodiment of the present disclosure, and FIG. 21 is a cross-sectional view of the rotating part according to the fourth embodiment of the present disclosure.

As illustrated in FIGS. 18 to 21, the eyeglasses 10 according to a fourth embodiment of the present disclosure includes the eyeglass rim 20, the eyeglass temple length part 30, and the earpiece part 100.

Refer to the above description for description of the eyeglass rim 20.

As described above, the eyeglass temple length part 30 includes the front eyeglass temple length part 32 and the rear eyeglass temple length part 34.

Further, the earpiece part 100 includes the nose-contact earpiece unit 110 and the nose-separation earpiece unit 120.

Particularly, the nose-contact earpiece unit 110 includes the nose-contact connecting part 112 and the nose-contact earpiece part 114. Here, the nose-contact connecting part 112 may be integrally formed with the nose-contact earpiece part 114. Likewise, the eyeglass temple length part 30 may be integrally formed with the nose-contact connecting part 112.

The nose-contact earpiece unit 110 extends from the eyeglass temple length part 30 in an axial direction. Thus, the nose-contact earpiece part 114 comes into contact with an upper side of the ear when the eyeglasses 10 are worn from the front.

The nose-contact earpiece part 114 extends from the nose-contact connecting part 112. Thus, the nose-contact earpiece part 114 is supported at the ear while the lens 22 disposed at the eyeglass rim 20 is placed in a front field of view of the wearer's eye. Particularly, the nose-contact earpiece part 114 may be formed along an arc-shaped trajectory to surround a rear side of the ear, extend in a straight line from the nose-contact connecting part 112, or be formed in a linear shape while being bent. That is, the nose-contact earpiece part 114 is formed in various shapes and passes over the upper side of the ear.

Accordingly, when the eyeglasses 10 are worn from the front, the nose-contact earpiece part 114 passes over the ear such that the eyeglasses 10 are not easily removed.

Here, at least two of the eyeglass temple length part 30, the nose-contact connecting part 112, and the nose-contact earpiece part 114 may be integrally formed.

The nose-separation earpiece unit 120 is connected to one or more of the eyeglass temple length part 30 and the nose-contact earpiece unit 110 and serves to vary a portion passing over the ear and make a position at which the eyeglass rim 20 is worn to be different from the nose-contact earpiece unit 110.

That is, by utilizing the nose-separation earpiece unit 120, the wearer may stably wear the eyeglasses 10 at a position deviated from the wearer's field of view, such as above the head, even when the wearer separates the eyeglasses 10 from a main part of his or her face to wash or apply makeup, or when things are viewed without a lens due to having myopia or the like.

Separate from the nose-contact earpiece unit 110 extending from the eyeglass temple length part 30 and passing over the wearer's ear, the nose-separation earpiece unit 120 may make the position at which the eyeglass rim 20 is worn to be different from the nose-contact earpiece unit 110 when the nose-separation earpiece unit 120 is connected to one or more of the eyeglass temple length part 30 and the nose-contact earpiece unit 110 and passes over the ear.

Here, the nose-separation earpiece unit 120 includes the nose-separation extending portion 122 and the nose-separation earpiece part 124. Here, the nose-separation extending portion 122 may be integrally formed with the nose-separation earpiece part 124. Likewise, the eyeglass temple length part 30 may be integrally formed with the nose-separation extending portion 122.

The eyeglass temple length part 30 includes the rotating part 200.

The rotating part 200 serves to adjust an angle of the front eyeglass temple length part 32 with respect to the rear eyeglass temple length part 34 and adjust the position at which the lens 22 or the eyeglass rim 20 is worn. Here, when the nose-separation earpiece unit 120 is not in use, the nose-separation earpiece unit 120 is folded to come into contact with the nose-contact earpiece unit 110 so that aesthetic may be improved and discomfort, due to the nose-separation earpiece unit 120 coming into contact with the side of the head when not in use, is prevented.

Particularly, the rotating part 200 includes the connector 210 and the pivot 230.

The connector 210 is disposed at an end or a border of the rear eyeglass temple length part 34 or at the nose-contact connecting part 112. For convenience, the connector 210 is assumed as being disposed at the nose-contact connecting part 112.

The connector 210 has a supporter 214 extending from a border. Shapes of the connector 210 and the supporter 214 may be changed into various other shapes.

To allow rotation of the front eyeglass temple length part 32 with respect to the rear eyeglass temple length part 34, the pivot 230 is inserted into the nose-separation extending portion 122 and the supporter 214. Here, the nose-separation earpiece unit 120 is forcibly rotated with respect to the nose-contact earpiece unit 110. Accordingly, the pivot 230 serves to allow the position at which the eyeglass rim 20 is worn to be maintained in either the nose-contact state or the nose-separation state.

Here, when a binding force of the pivot 230 is weakened, or due to the self-loads of the eyeglass rim 20 and the lens 22, the nose-separation earpiece unit 120 may be inclined upward by a predetermined angle with respect to the nose-contact earpiece unit 110 and then arbitrarily inclined downward.

To prevent this, the nose-separation extending portion 122 includes the first polygonal portion 240 formed along a polygonal trajectory at an end coming into contact with the connector 210.

As any one flat portion of the first polygonal portion 240 comes into surface contact with the surface of the connector 210, the position of the nose-separation extending portion 122 may be fixed.

Further, the connector 210 may have a second polygonal portion (not illustrated) formed to come into surface contact with and support the first polygonal portion 240.

Refer to the above description for undescribed reference numerals.

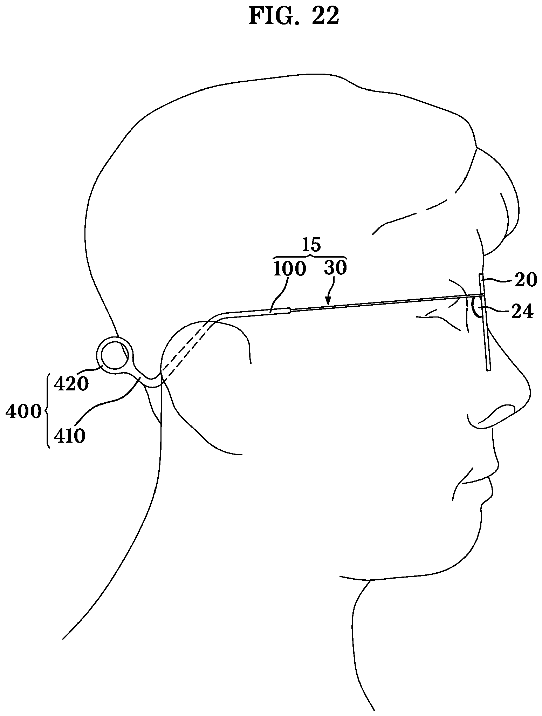

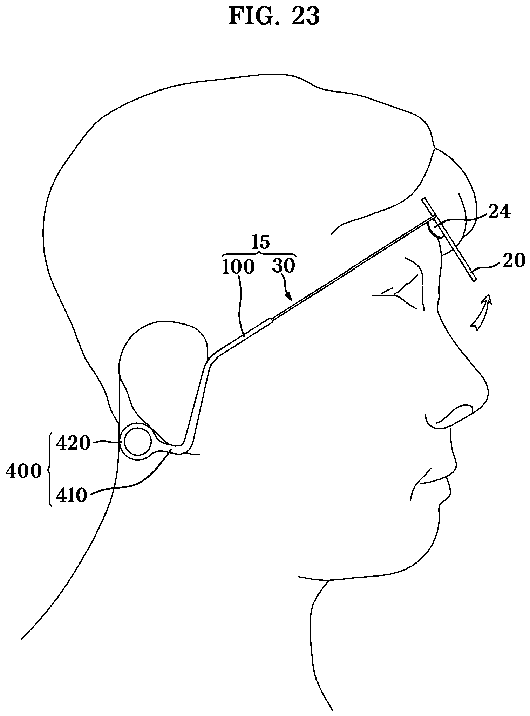

FIG. 22 is a side view of eyeglasses being worn from the front according to a fifth embodiment of the present disclosure, and FIG. 23 is a side view of the eyeglasses being worn while being lifted according to the fifth embodiment of the present disclosure.

As illustrated in FIGS. 22 and 23, the eyeglasses 10 according to a fifth embodiment of the present disclosure includes the eyeglass rim 20, the eyeglass temple length part 30, and the earpiece part 100.

The eyeglass temple 15, which is a portion connected to the eyeglass rim 20 and passing over a wearer's ear, includes the eyeglass temple length part 30, which is a longitudinal portion of the eyeglass temple 15 connected to the eyeglass rim 20, and the earpiece part 100, which is a portion passing over the ear.

Particularly, by manipulating at least one of the earpiece part 100 and the eyeglass temple length part 30, a position at which the lens 22 or the eyeglass rim 20 is worn on the wearer may be adjusted.

When the earpiece part 100 comes into contact with the upper side of the wearer's ear or the upper side and the rear side of the ear, the lens 22 is placed at a nose-contact position. Further, when the earpiece part 100 comes into contact with the lower side of the wearer's ear or the rear sides of the ear, the lens 22 is placed at a nose-separation position.

When the lens 22 is placed at the nose-separation position, the earpiece part 100 and the eyeglass temple length part 30 may be inclined upward, or a portion of the earpiece part 100 and the eyeglass temple length part 30 may be inclined upward.

In this case, the lens 22 and the eyeglass temple length part 30 may be rotated downward to the nose-contact position due to the loads thereof.

To prevent this, the earpiece part 100 may have an eyeglass temple rotation preventing part 400 extending to prevent or suppress rotation of the eyeglass temple 15 so that the position at which the eyeglass rim 20 is worn is maintained at the nose-separation state.

Here, the eyeglass temple rotation preventing part 400 includes a bent extending portion 410 and an adhering support portion 420.

The bent extending portion 410 extends from the earpiece part 100. Particularly, the bent extending portion 410 extends upward from an end of the earpiece part 100. Thus, the earpiece part 100 comes into contact with the lower side of the ear and, when the lens 22 is placed at the nose-separation position, the bent extending portion 410 comes into contact with the peripheral surface of the rear side of the ear and the head.

The adhering support portion 420 extends from the bent extending portion 410 and adheres to the rear side and the upper side of the ear when the lens 22 is placed at the nose-separation position.

Accordingly, rotation of the eyeglass temple 15, which is in the nose-separation state, toward a portion within the field of view is prevented or suppressed.

That is, as the adhering support portion 420 supports the eyeglass temple 15, which is in the nose-separation state, rotation of the eyeglass temple 15 is prevented or suppressed in a nose-contact state. The shape of the adhering support portion 420 may be changed into various other shapes.

Refer to the above description for undescribed reference numerals.

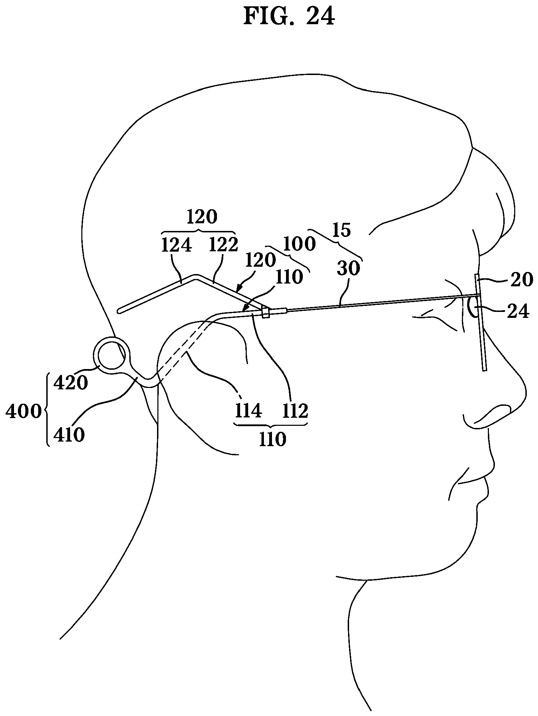

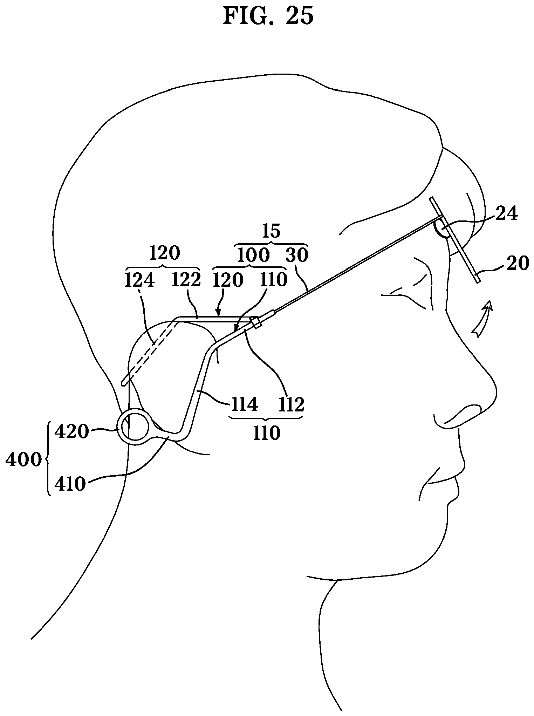

FIG. 24 is a side view of eyeglasses being worn from the front according to a sixth embodiment of the present disclosure, and FIG. 25 is a side view of the eyeglasses being worn while being lifted according to the sixth embodiment of the present disclosure.

As illustrated in FIGS. 24 and 25, the eyeglasses 10 according to a sixth embodiment of the present disclosure includes the eyeglass rim 20, the eyeglass temple length part 30, and the earpiece part 100.

Particularly, the eyeglass rim 20 and the eyeglass temple length part 30 are the same as those described above with respect to the first embodiment.

As described above with respect to the first embodiment, the earpiece part 100 includes the nose-contact earpiece unit 110 and the nose-separation earpiece unit 120.

Here, when the lens 22 is placed outside the field of view, i.e., when the nose-separation extending portion 122 and the nose-separation earpiece part 124 are placed at the upper side of the ear, the earpiece part 100 and the eyeglass temple length part 30 are inclined upward, or a portion of the earpiece part 100 and the eyeglass temple length part 30 are inclined upward.

In this case, the lens 22 and the eyeglass temple length part 30 may be rotated downward to the within-field-of-view position due to the loads thereof.

To prevent this, the nose-contact earpiece unit 110 or the nose-separation earpiece unit 120 of the earpiece part 100 may have the eyeglass temple rotation preventing part 400 extending to prevent or suppress rotation of the eyeglass temple 15 so that the position at which the eyeglass rim 20 is worn is maintained at the out-of-field-of-view state.

For convenience, the eyeglass temple rotation preventing part 400 is illustrated as extending from the nose-contact earpiece part 114 of the nose-contact earpiece unit 110.

Here, the eyeglass temple rotation preventing part 400 includes the bent extending portion 410 and the adhering support portion 420.

The bent extending portion 410 extends from the nose-contact earpiece part 114. Particularly, the bent extending portion 410 extends upward from an end of the nose-contact earpiece part 114. Thus, the nose-contact earpiece part 114 comes into contact with the lower side of the ear and, when the lens 22 is placed outside the field of view, the bent extending portion 410 comes into contact with the peripheral surface of the rear side of the ear and the head.

The adhering support portion 420 extends from the bent extending portion 410 and is adhered to the rear side and the upper side of the ear when the lens 22 is placed outside the field of view.

Accordingly, rotation of the eyeglass temple 15, which is in the nose-separation state, toward a portion within the field of view is prevented or suppressed.

That is, as the adhering support portion 420 supports the eyeglass temple 15, which is in the nose-separation state, rotation of the eyeglass temple 15 is prevented or suppressed in a nose-contact state. The shape of the adhering support portion 420 may be changed into various other shapes.

Refer to the above description for undescribed reference numerals.

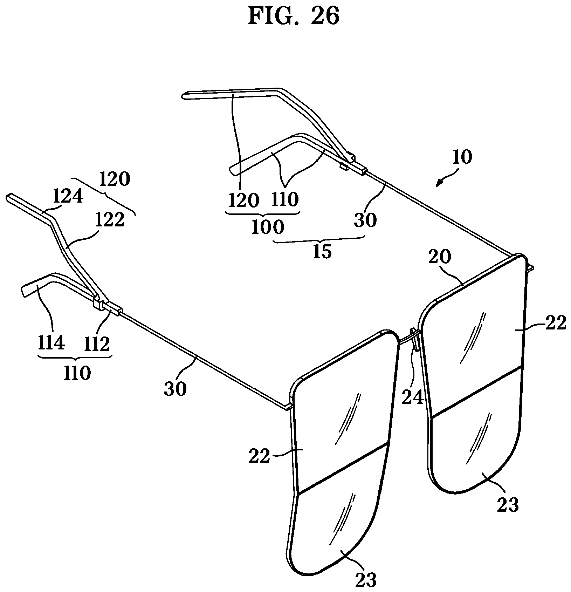

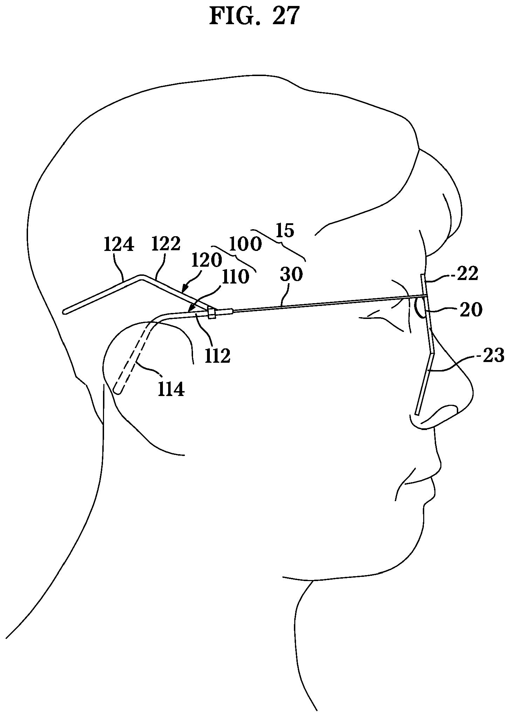

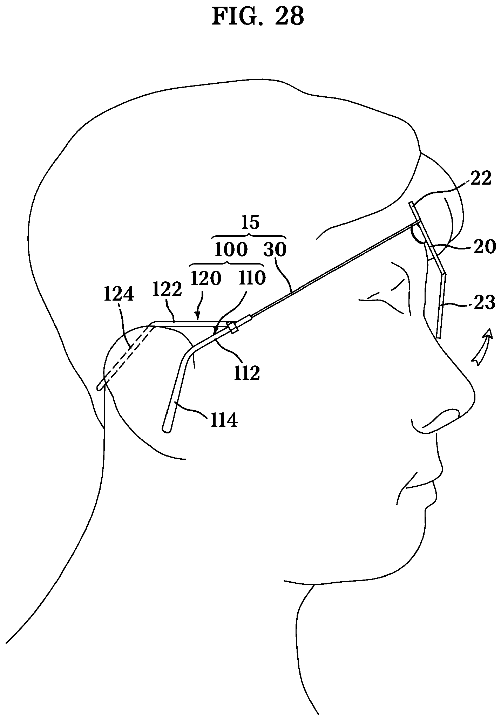

FIG. 26 is a perspective view of eyeglasses according to a seventh embodiment of the present disclosure, FIG. 27 is a side view illustrating a state of the eyeglasses worn from the front according to the seventh embodiment of the present disclosure, and FIG. 28 is a side view illustrating a state in which the eyeglasses according to the seventh embodiment of the present disclosure are worn while being lifted.

As illustrated in FIGS. 26 to 28, the eyeglasses 10 according to a seventh embodiment of the present disclosure includes the eyeglass rim 20, the eyeglass temple length part 30, and the earpiece part 100.

Particularly, the eyeglass rim 20, the eyeglass temple length part 30, and the earpiece part 100 are the same as those described above with respect to the third embodiment.

The lens 22 has auxiliary lenses 23 having different focal points and extending downward or upward. For convenience, the auxiliary lenses 23 are illustrated as extending downward from the lens 22.

Thus, when a position at which the eyeglasses 10 are worn is adjusted by manipulating at least one of the earpiece part 100 and the eyeglass temple length part 30, the auxiliary lenses 23 are placed within the field of view.

Refer to the above description for undescribed reference numerals.

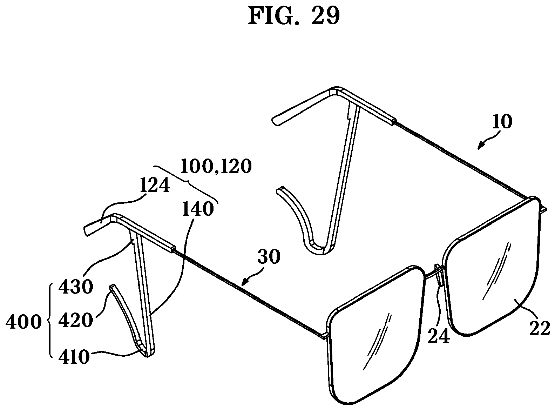

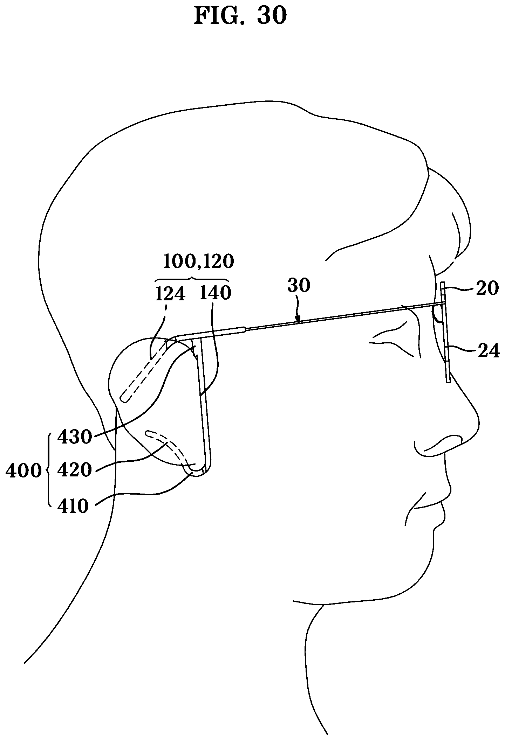

FIG. 29 is a perspective view of eyeglasses according to an eighth embodiment of the present disclosure, and FIG. 30 is a side view illustrating a state in which the eyeglasses according to the eighth embodiment of the present disclosure are worn.

As illustrated in FIGS. 29 and 30, the eyeglass 10 according to an eighth embodiment of the present disclosure includes the eyeglass rim 20, the eyeglass temple length part 30, and the earpiece part 100.

Refer to the above description for descriptions of the eyeglass rim 20 and the eyeglass temple length part 30.

The earpiece part 100 includes the nose-separation earpiece unit 120, and the nose-separation earpiece unit 120 includes the nose-separation earpiece part 124 and a lower portion maintaining part 140.

The nose-separation earpiece part 124 is connected to the eyeglass temple length part 30 and passes over the wearer's ear. That is, the nose-separation earpiece part 124 comes into contact with the upper side of the ear or the peripheral surfaces of the upper side and the rear side of the ear when the eyeglasses 20 are worn normally. Here, being "worn normally" refers to a state in which the lens 22 is placed within the field of view, and the lens 22 without the eyeglass rim 20, the eyeglass rim 20 without the bridge 24, or the bridge 24 does not come into contact with the wearer's nose, or even when the lens 22 is placed within the field of view, and the lens 22 without the eyeglass rim 20, the eyeglass rim 20 without the bridge 24, or the bridge 24 comes into contact with the wearer's nose, a load placed on the wearer's nose is reduced. Because a portion of the eyeglasses does not come into contact with the nose, the eyeglasses may be worn while the bridge 24 is not included in the eyeglasses.

The lower portion maintaining part 140 is formed by being connected to at least one of the eyeglass temple length part 30 or the nose-separation earpiece part 124. Here, when the lower portion maintaining part 140 is supported by coming into contact with the front side of the ear, the lower portion maintaining part 140 may allow the state in which the lens 22 without the eyeglass rim 20, the eyeglass rim 20 without the bridge 24, or the bridge 24 is separated from the nose to be maintained or mitigate a pressure caused by the load of the eyeglass rim 20 or the lens applied to the nose.

The lower portion maintaining part 140 may be formed in various shapes and may be detachably coupled to the eyeglass temple length part 30 or the nose-separation earpiece part 124.

The lower portion maintaining part 140 may have the eyeglass temple rotation preventing part 400 extending to prevent or suppress the lens or the eyeglass rim 20 from pivotally rotating downward about the earpiece part 100 so that the state in which the lens 22 without the eyeglass rim 20, the eyeglass rim 20 without the bridge 24, or the bridge 24 is separated from the nose or may at any time be separated therefrom is maintained.

Here, the eyeglass temple rotation preventing part 400 includes at least one of the bent extending portion 410, the adhering support portion 420, and a reinforcing member 430.

The bent extending portion 410 extends from the lower portion maintaining part toward the peripheral surface of the rear side of the ear, and serves to support the eyeglass temple 15, which is in a state in which the lens 22 without the eyeglass rim 20, the eyeglass rim 20 without the bridge 24, or the bridge 24 is separated from the wearer's nose. Here, the nose-separation earpiece part 124 may come into contact with or be separated from the upper side of the ear. The shape of the bent extending portion 410 may be changed into various shapes.

The adhering support portion 420 extends from the bent extending portion 410, is adhered to at least one of a rear side and a lower side of the ear, and serves to firmly maintain the eyeglass temple 15 in the state in which the lens 22 without the eyeglass rim 20, an eyeglass rim 20 without the bridge 24, or the bridge 24 is separated from the wearer's nose. That is, at least one of the adhering support portion 420 and the bent extending portion 410 is adhered to at least one of the peripheral surfaces of the rear side and the lower side of the ear and prevents the eyeglass temple 15 from falling. Further, in the nose-contact state, the lens 22 is in a state in which the lens 22 without the eyeglass rim 20, the eyeglass rim 20 without the bridge 24, or the bridge 24 is separated from the nose or may at any time be separated therefrom.

Various shapes may be applied as the shape of the adhering support portion 420.

The reinforcing member 430 protrudes from the lower surface of the eyeglass temple length part 30, the nose-separation earpiece part 124, or the upper surface of the lower portion maintaining part 140, and is supported at the peripheral surface of the upper portion of the ear, thereby serving to prevent or suppress the eyeglass temple 15 from being moved downward while the lens 22 without the eyeglass rim 20, the eyeglass rim 20 without the bridge 24, or the bridge 24 is separated from the nose or is maintained in a direction separating therefrom, which is a state in which the eyeglasses 10 are worn normally. The reinforcing member 430 may be deformed into various shapes.

Refer to the above description for undescribed reference numerals.

Although the present disclosure has been described above with reference to the accompanying drawings, this is merely illustrative, and one of ordinary skill in the art to which the present disclosure should understand that various modifications and other equivalent embodiments may be derived from the above description. Therefore, the actual scope of the present disclosure should be defined by the claims below.

## Claims

1. Eyeglasses comprising an eyeglass temple connected to a lens or an eyeglass rim and passing over an ear, wherein:
the eyeglass temple includes an eyeglass temple length part, which is an axial portion of the eyeglass temple connected to the lens or the eyeglass rim, and an earpiece part passing over the ear; and
the earpiece part maintains a state in which a position of the lens or the eyeglass rim is separated from a wearer's nose or mitigates a pressure caused by a load of the eyeglass rim or lens applied to the wearer's nose.

2. The eyeglasses of claim 1, wherein, by manipulating at least one of the earpiece part and the eyeglass temple length part, a position at which the lens or the eyeglass rim is worn on the wearer is adjusted to be separated from the wearer's nose.

3. The eyeglasses of claim 1, wherein:
the earpiece part includes a nose-separation earpiece unit; and
the nose-separation earpiece unit includes a nose-separation earpiece part connected to the eyeglass temple length part and passing over the wearer's ear, and a lower portion maintaining part formed by being connected to at least one of the eyeglass temple length part or the nose-separation earpiece part.

4. The eyeglasses of claim 3, wherein, when supported by coming into contact with a front side of the ear, the lower portion maintaining part maintains a state in which a lens without the eyeglass rim, an eyeglass rim without a bridge, or a bridge is separated from the nose or mitigates a pressure that is caused by the load of the eyeglass rim or lens and applied to the nose.

5. The eyeglasses of claim 1, wherein the earpiece part has an eyeglass temple rotation preventing part extending to prevent or suppress the lens or the eyeglass rim from pivotally rotating downward about the earpiece part so that the state in which a lens without the eyeglass rim, an eyeglass rim without a bridge, or a bridge is separated from the nose is maintained.

6. The eyeglasses of claim 5, wherein:
at least one of the eyeglass temple length part or the nose-separation earpiece part passing over the wearer's ear forms a lower portion maintaining part; and
the eyeglass temple rotation preventing part includes a bent extending portion extending from the lower portion maintaining part toward a peripheral surface at a rear side of the ear and configured to support the eyeglass temple, which is in a state in which a lens without the eyeglass rim, an eyeglass rim without a bridge, or a bridge is separated from the wearer's nose, and an adhering support portion extending from the bent extending portion, adhered to at least one of a rear side and a lower side of the ear, and configured to firmly maintain the eyeglass temple in the state in which a lens without the eyeglass rim, an eyeglass rim without a bridge, or a bridge is separated from the nose.

7. The eyeglasses of claim 5, wherein:
the eyeglass temple length part connects the nose-separation earpiece port passing over the wearer's ear;
the eyeglass temple length part or the nose-separation earpiece part includes a lower portion maintaining part; and
the eyeglass temple rotation preventing part includes a reinforcing member protruding from a lower surface of the eyeglass temple length part or nose-separation earpiece part or from an upper surface of the lower portion maintaining part, supported by a peripheral surface at an upper portion of the ear, and configured to prevent the eyeglass temple from moving downward.

8. The eyeglasses of claim 2, wherein:
the eyeglass temple length part includes a front eyeglass temple length part at a side connected to the lens or the eyeglass rim and a rear eyeglass temple length part at a side connected to the earpiece part; and
the eyeglasses include a rotating part configured to adjust an angle of the rear eyeglass temple length part with respect to the front eyeglass temple length part and adjust a position at which the lens or the eyeglass rim is worn.

9. The eyeglasses of claim 2, wherein an overall length including the eyeglass temple length part and the earpiece part is adjusted by a length adjusting part.

10. The eyeglasses of claim 8, wherein the rotating part includes:
a connector disposed at the front eyeglass temple length part and forming a rib;
an accommodating part formed at the rear eyeglass temple length part to accommodate the rib; and
a pivot inserted into the rib placed in the accommodating part and the rear eyeglass temple length part, and configured to allow rotation of the rear eyeglass temple length part with respect to the front eyeglass temple length part to maintain a state in which a position at which the eyeglass rim is worn is either close to or separated from the nose.

11. The eyeglasses of claim 2, wherein the earpiece part includes:
a nose-contact earpiece unit connected to the eyeglass temple length part and passing over the wearer's ear; and
a nose-separation earpiece unit configured to make the position at which the eyeglass rim is worn to be different from the nose-contact earpiece unit to maintain a state of being separated from the wearer's nose when the nose-separation earpiece unit is connected to one or more of the eyeglass temple length part and the nose-contact earpiece unit and passes over the ear.

12. The eyeglasses of claim 11, including a rotating part configured to allow rotation of the nose-separation earpiece unit with respect to the eyeglass temple length part or the nose-contact earpiece unit.

13. The eyeglasses of claim 11, wherein the nose-separation earpiece unit includes:
one or more nose-separation extending portions extending from the eyeglass temple length part or the nose-contact earpiece unit; and
a nose-separation earpiece part extending from the nose-separation extending portion to be supported at a perimeter of the ear while the eyeglass rim is separated from the wearer's nose.

14. The eyeglasses of claim 11, wherein the nose-contact earpiece unit includes:
a nose-contact earpiece part formed to be supported at the perimeter of the ear while the eyeglass rim is placed within a front field of view of the eye; and
a nose-contact connecting part configured to connect the nose-contact earpiece part to the eyeglass temple length part.

15. The eyeglasses of claim 11, wherein any one of the nose-contact earpiece unit and the nose-separation earpiece unit is mounted at an upper portion of the perimeter of the ear.

16. The eyeglasses of claim 11, wherein at least a portion of the nose-separation earpiece unit is placed above the nose-contact earpiece unit.

17. The eyeglasses of claim 11, wherein, when the eyeglasses are worn so that the nose-separation earpiece unit is supported at the upper side of the perimeter of the ear, the eyeglass rim is placed above the field of view.

18. The eyeglasses of claim 11, wherein, when the eyeglasses are worn so that the eyeglass rim is placed above and outside the field of view, the wearer's ear is placed between the nose-separation earpiece unit and the nose-contact earpiece unit.

19. The eyeglasses of claim 12, wherein the rotating part includes:
a connector disposed at the nose-contact earpiece unit and forming a protruding rib; and
a pivot inserted into the rib and the nose-separation earpiece unit and configured to allow rotation of the nose-separation earpiece unit with respect to the nose-contact earpiece unit to maintain a state in which a position at which the eyeglass rim is worn is either separated from the nose or in contact with the nose.

20. The eyeglasses of claim 12, wherein:
the nose-separation earpiece unit is rotated toward the nose-contact earpiece unit by the rotating part; and
the nose-contact earpiece unit and the nose-separation earpiece unit are placed to be in the vicinity of or be adhered to a side of the head.

21. The eyeglasses of claim 11, wherein:
the eyeglass temple length part includes a front eyeglass temple length part at a side connected to the eyeglass rim and a rear eyeglass temple length part;
the rear eyeglass temple length part is formed of the nose-contact earpiece unit and the nose-separation earpiece unit; and
the front eyeglass temple length part is connected to be rotatable to the rear eyeglass temple length part, and the nose-separation earpiece unit passes over the ear as the front eyeglass temple length part is rotated at the rear eyeglass temple length part.

22. The eyeglasses of claim 21, wherein at least a portion of the nose-separation earpiece unit is placed behind the nose-contact earpiece unit.

23. The eyeglasses of claim 11, wherein the nose-separation earpiece unit is integrally formed with the nose-contact earpiece unit or the eyeglass temple length part or is detachably coupled to the nose-contact earpiece unit or the eyeglass temple length part.

24. The eyeglasses of claim 13, wherein:
the nose-contact earpiece unit includes a nose-contact earpiece part formed to be supported at the perimeter of the ear while the eyeglass rim is placed within a front field of view of the eye, and
the nose-contact earpiece part comes into contact with at least one of a side of the wearer's face and the front side of the ear and supports the eyeglass rim when the nose-separation earpiece part passes over the ear.

25. The eyeglasses of claim 1, wherein the eyeglass rim is an edge of an eyeglass frame into which a lens is fitted, or is a border of a lens.

26. The eyeglasses of claim 13, wherein at least two of the eyeglass temple length part, the nose-separation extending portion, and the nose-separation earpiece part are integrally formed.

27. The eyeglasses of claim 14, wherein at least two of the eyeglass temple length part, the nose-contact connecting part, and the nose-contact earpiece part are integrally formed.

28. The eyeglasses of claim 8, wherein:
an overall length including the eyeglass temple length part and the earpiece part is adjusted by a length adjusting part;
the rotating part is rotated manually or by power of a motor; and
the length adjusting part adjusts the length of the eyeglass temple length part or the earpiece part manually or by power of the motor.

29. The eyeglasses of claim 1, wherein the earpiece part has an eyeglass temple rotation preventing part extending to prevent rotation of the eyeglass temple so that a state in which a position at which the eyeglass rim is worn is separated from the wearer's nose is maintained.

30. The eyeglasses of claim 29, wherein the eyeglass temple rotation preventing part includes:
a bent extending portion extending from the earpiece part to come into contact with the peripheral surface of the ear when the earpiece part comes into contact with a lower side of the ear, coming into contact with the peripheral surface of the ear and the head, and configured to support the eyeglass temple which is in the nose-separation state; and
an adhering support portion extending from the bent extending portion, adhered to the rear side and the upper side of the ear, and configured to prevent rotation of the eyeglass temple, which is in the nose-separation state.

31. The eyeglasses of claim 1, wherein:
the lens has auxiliary lenses extending therefrom and having different focal points; and
when positions at which the eyeglasses are worn is adjusted by manipulating at least one of the earpiece part and the eyeglass temple length part, the auxiliary lenses are placed within the field of view.

32. An eyeglass frame comprising an eyeglass temple which is a portion connected to a lens or an eyeglass rim and passing over an ear, wherein:
the eyeglass temple includes an eyeglass temple length part, which is a longitudinal portion of the eyeglass temple connected to the lens or the eyeglass rim, and an earpiece part passing over the ear; and
a state in which a position of the lens or the eyeglass rim is separated from a wearer's nose is maintained.

33. The eyeglass frame of claim 32, wherein, by manipulating at least one of the earpiece part and the eyeglass temple length part, a position at which the eyeglass rim is worn on the wearer is adjusted to be separated from the wearer's nose.

34. The eyeglass frame of claim 32, wherein:
the earpiece part includes a nose-separation earpiece unit; and
the nose-separation earpiece unit includes a nose-separation earpiece part connected to the eyeglass temple length part and passing over the wearer's ear, and a lower portion maintaining part formed by being connected to at least one of the eyeglass temple length part or the nose-separation earpiece part.

35. The eyeglass frame of claim 34, wherein, when supported by coming into contact with a front side of the ear, the lower portion maintaining part maintains a state in which a lens without the eyeglass rim, an eyeglass rim without a bridge, or a bridge is separated from the nose or mitigates a pressure that is caused by the load of the eyeglass rim or lens and applied to the nose.

36. The eyeglass frame of claim 32, wherein the earpiece part has an eyeglass temple rotation preventing part extending to prevent the lens or the eyeglass rim from pivotally rotating downward about the earpiece part so that the state in which a lens without the eyeglass rim, an eyeglass rim without a bridge, or a bridge is separated from the nose is maintained.

37. The eyeglass frame of claim 36, wherein:
the earpiece part includes a nose-separation earpiece unit;
the nose-separation earpiece unit includes a nose-separation earpiece part connected to the eyeglass temple length part and passing over the wearer's ear;
at least one of the eyeglass temple length part and the nose-separation earpiece part connects a lower portion maintaining part; and
the eyeglass temple rotation preventing part includes a bent extending portion extending from the lower portion maintaining part toward a peripheral surface at a rear side of the ear and configured to support the eyeglass temple, which is in a state in which a lens without the eyeglass rim, an eyeglass rim without a bridge, or a bridge is separated from the nose, and an adhering support portion extending from the bent extending portion, adhered to at least one of a rear side and a lower side of the ear, and configured to firmly maintain the eyeglass temple in the state in which a lens without the eyeglass rim, an eyeglass rim without a bridge, or a bridge is separated from the nose.

38. The eyeglass frame of claim 36, wherein:
the eyeglass temple length part connects a nose-separation earpiece part passing over the wearer's ear;
at least one of the eyeglass temple length part and the nose-separation earpiece part connects a lower portion maintaining part; and
the eyeglass temple rotation preventing part includes a reinforcing member protruding from a lower surface of the eyeglass temple length part or nose-separation earpiece part or from an upper surface of the lower portion maintaining part, supported by a peripheral surface at an upper portion of the ear, and configured to suppress the eyeglass temple from moving downward.

39. The eyeglass frame of claim 32, wherein:
the eyeglass temple length part includes a front eyeglass temple length part at a side connected to the lens or the eyeglass rim and a rear eyeglass temple length part at a side connected to the earpiece part; and
the eyeglass frame includes a rotating part configured to adjust an angle of the front eyeglass temple length part with respect to the rear eyeglass temple length part and adjust a position at which the eyeglass rim is worn.

40. The eyeglass frame of claim 32, wherein an overall length including the eyeglass temple length part and the earpiece part is adjusted by a length adjusting part.

41. The eyeglass frame of claim 32, wherein the earpiece part includes:
a nose-contact earpiece unit connected to the eyeglass temple length part and passing over the wearer's ear; and
a nose-separation earpiece unit configured to make the position at which the eyeglass rim is worn to be different from the nose-contact earpiece unit to maintain a state of being separated from the wearer's nose when the nose-separation earpiece unit is connected to one or more of the eyeglass temple length part and the nose-contact earpiece unit and passes over the ear.

42. The eyeglass frame of claim 41, including a rotating part configured to allow rotation of the nose-separation earpiece unit with respect to the eyeglass temple length part or the nose-contact earpiece unit.

43. The eyeglass frame of claim 41, wherein the nose-separation earpiece unit includes:
one or more nose-separation extending portions extending from the eyeglass temple length part or the nose-contact earpiece unit; and
a nose-separation earpiece part extending from the nose-separation extending portion to be supported at a perimeter of the ear while the eyeglass rim is separated from the nose and placed outside a front field of view of the eye.

44. The eyeglass frame of claim 41, wherein the nose-contact earpiece unit includes:
a nose-contact earpiece part formed to be supported at the perimeter of the ear while the eyeglass rim comes into contact with the wearer's nose and is placed within a front field of view of the eye; and
a nose-contact connecting part configured to connect the nose-contact earpiece part to the eyeglass temple length part.

45. The eyeglass frame of claim 32, wherein the earpiece part has an eyeglass temple rotation preventing part extending to prevent or suppress rotation of the eyeglass temple so that a state in which a position at which the eyeglass rim is worn is separated from the wearer's nose and is placed outside the field of view is maintained.

46. The eyeglass frame of claim 45, wherein the eyeglass temple rotation preventing part includes:
a bent extending portion extending from the earpiece part to come into contact with the peripheral surface of the ear when the earpiece part comes into contact with a lower side of the ear, coming into contact with the peripheral surface of the ear and the head, and configured to support the eyeglass temple which is in the nose-separation state; and
an adhering support portion extending from the bent extending portion, adhered to the rear side and the upper side of the ear, and configured to prevent rotation of the eyeglass temple, which is in the nose-separation state.

47. The eyeglass frame of claim 32, wherein:
the lens has auxiliary lenses extending therefrom and having different focal points; and
when positions at which the eyeglasses are worn is adjusted by manipulating at least one of the earpiece part and the eyeglass temple length part, the auxiliary lenses are placed within the field of view.

48. A nose-separation earpiece unit comprising an earpiece part coupled to an eyeglass temple, which is a portion connected to a lens of eyeglasses or an eyeglass rim and passing over an ear, and configured to vary a portion passing over the ear and adjust a position at which the eyeglass rim is worn,
wherein a position at which the lens or the eyeglass rim is worn on a wearer is adjusted by manipulating the earpiece part.

49. The nose-separation earpiece unit of claim 48, further comprising an eyeglass temple length part, which is a longitudinal portion of the eyeglass temple connected to the eyeglass rim.

50. The nose-separation earpiece unit of claim 49, wherein:
the eyeglass temple length part includes a front eyeglass temple length part at a side connected to the lens or the eyeglass rim and a rear eyeglass temple length part at a side connected to the earpiece part; and
the nose-separation earpiece unit includes a rotating part configured to adjust an angle of the front eyeglass temple length part with respect to the rear eyeglass temple length part and adjust a position at which the lens or the eyeglass rim is worn.

51. The nose-separation earpiece unit of claim 49, wherein an overall length including the eyeglass temple length part and the earpiece part is adjusted by a length adjusting part.

52. The nose-separation earpiece unit of claim 49, wherein, separate from a nose-contact earpiece unit connected to the eyeglass temple length part and passing over a wearer's ear, when the nose-separation earpiece unit is connected to one or more of the eyeglass temple length part and the nose-contact earpiece unit and passes over the ear, a position at which the eyeglass rim is worn is made to be different from the nose-contact earpiece unit, and a state in which the nose-separation earpiece unit is separated from the wearer's nose is maintained.

53. The nose-separation earpiece unit of claim 52, including a rotating part configured to allow rotation of the nose-separation earpiece unit with respect to the eyeglass temple length part or the nose-contact earpiece unit.

54. The nose-separation earpiece unit of claim 52, wherein the nose-separation earpiece unit includes:
one or more nose-separation extending portions extending from the eyeglass temple length part or the nose-contact earpiece unit; and
a nose-separation earpiece part extending from the nose-separation extending portion to be supported at a perimeter of the ear while the eyeglass rim is separated from the wearer's nose.

55. The nose-separation earpiece unit of claim 52, wherein the nose-contact earpiece unit includes:
a nose-contact earpiece part formed to be supported at the perimeter of the ear while the eyeglass rim is placed within a front field of view of the eye; and
a nose-contact connecting part configured to connect the nose-contact earpiece part to the eyeglass temple length part.

56. The nose-separation earpiece unit of claim 52, wherein:
any one of the nose-contact earpiece unit and the nose-separation earpiece unit is mounted and fixed at an upper portion of the perimeter of the ear;
at least a portion of the nose-separation earpiece unit is placed above the nose-contact earpiece unit; and
when the eyeglasses are worn so that the nose-separation earpiece unit is supported at the upper side of the perimeter of the ear, the eyeglass rim is separated from the wearer's nose.

57. The nose-separation earpiece unit of claim 52, wherein, when the eyeglasses are worn so that the eyeglass rim is placed above and outside the field of view, the wearer's ear is placed between the nose-separation earpiece unit and the nose-contact earpiece unit.

58. The nose-separation earpiece unit of claim 52, wherein:
the eyeglass temple length part includes a front eyeglass temple length part at a side connected to the eyeglass rim and a rear eyeglass temple length part;
the rear eyeglass temple length part is formed of the nose-contact earpiece unit and the nose-separation earpiece unit; and
the front eyeglass temple length part is connected to be rotatable to the rear eyeglass temple length part, and the nose-separation earpiece unit passes over the ear as the front eyeglass temple length part is rotated at the rear eyeglass temple length part.

59. The nose-separation earpiece unit of claim 48, wherein the earpiece part has an eyeglass temple rotation preventing part extending to suppress rotation of the eyeglass temple so that a state in which a position at which the eyeglass rim is worn is separated from the wearer's nose is maintained.

60. The nose-separation earpiece unit of claim 59, wherein the eyeglass temple rotation preventing part includes:
a bent extending portion extending from the earpiece part to come into contact with the peripheral surface of the ear when the earpiece part comes into contact with a lower side of the ear, coming into contact with the peripheral surface of the ear and the head, and configured to support the eyeglass temple which is in the nose-separation state; and
an adhering support portion extending from the bent extending portion, adhered to the rear side and the upper side of the ear, and configured to prevent rotation of the eyeglass temple, which is in the nose-separation state.
